# EUROPEAN PATENT APPLICATION

(11) **EP 4 663 384 A1**
(43) Date of publication of application: **17.12.2025**
(21) Application number: 25178383.3
(22) Date of filing: 22.05.2025
(51) Int. Cl.: B29C 64/129, B29C 64/277, B33Y 10/00, B33Y 30/00

(54) **A METHOD FOR VOLUMETRIC PRINTING A THREE-DIMENSIONAL OBJECT BY MULTI-COLOR PHOTOPOLYMERIZATION OF A PHOTOCURABLE RESIN**

(30) Priority: 13.06.2024 EP 24182127
(71) Applicant: xolo GmbH, 12489 Berlin (DE)
(72) Inventor: Reuter, Marcus, 12489 Berlln (DE); Herder, Martin, 12489 Berlin (DE); Arzhangnia, Yousef, 12489 Berlin (DE); König, Niklas, 12489 Berlin (DE); Israel, Eric, 12489 Berlin (DE); Garmshausen, Yves, 12489 Berlin (DE)
(74) Representative: Hafner & Kohl PartmbB

(57) **Abstract**

A method for volumetric printing a three-dimensional object by multi-color photopolymerization of a photocurable resin.

## Description

### Field of invention

The invention relates to a method for volumetric printing a three-dimensional object by multi-color photopolymerization, particularly by dual-color photopolymerization, of a photocurable resin, wherein the method comprises an irradiation process of irradiating, on basis of a plurality of printing parameters, a photocurable resin with light of a first wavelength and light of a second wavelength, different from the first wavelength, to form, via multi-color photopolymerization, particularly via dual-color photopolymerization, a three-dimensional object in at least one direction, wherein the light of the first wavelength and the light of the second wavelength intersect in a formation zone.

### Background Art

Respective methods for volumetric printing a three-dimensional object by multi-color photopolymerization, particularly by dual-color photopolymerization, of a photocurable resin are generally known from the prior art. Concrete embodiments of respective methods comprise principles known as xolography as specified in WO 2020/245456 A1, for instance.

While respective volumetric printing methods generally enable printing a three-dimensional object in a short period of time, particularly compared to conventional additive printing techniques which comprise a rather time-consuming layer-wise build-up of three-dimensional objects, volumetric printing methods occasionally face the challenge of structural anisotropies in the printed three-dimensional objects. Respective structural anisotropies of the printed three-dimensional objects can result in effects of undesired shrinkage and undesired deformation, respectively of the printed three-dimensional objects. These effects can compromise the geometrical accuracy and structural fidelity, respectively of the three-dimensional objects.

Hence, there is a need to improve respective volumetric printing methods with respect to the quality of the three-dimensional objects, particularly with respect to achieving higher structural isotropy of the three-dimensional objects which results in lower undesired shrinkage and undesired deformation and higher geometrical accuracy and structural fidelity.

It is therefore, the object of the invention to provide an improved method for volumetric printing of a three-dimensional object by multi-color photopolymerization of a photocurable resin.

### Summary of the invention

A first aspect of the invention relates to a method for volumetric printing at least one three-dimensional object by multi-color photopolymerization, particularly by dual-color photopolymerization, of a photocurable resin. The method comprises an irradiation process of irradiating, on basis of a plurality of printing parameters, a photocurable resin with light of a first wavelength and light of a second wavelength, which is different from the first wavelength, to form, by multi-color photopolymerization, particularly by dual-color photopolymerization, a three-dimensional object in at least one direction. The method thus, comprises a process of irradiating a photocurable resin with light of a first wavelength and light of a second wavelength, which is different from the first wavelength, to form, by multi-color photopolymerization, particularly by dual-color photopolymerization, at least one three-dimensional object in at least one direction, wherein irradiating the photocurable resin with the light of the first wavelength and the second wavelength is based on one or more printing parameters. The at least one direction can be or comprise a formation direction of the respective three-dimensional object to be printed, i. e. the or a direction in which the respective three-dimensional is printed. The method generally, enables volumetric printing of one or more three-dimensional objects in at least one direction or formation direction, respectively. The formation direction can also be deemed or denoted the printing direction.

The light of the first wavelength can comprise a wavelength in the range of: 350 nm - 500 nm, particularly 375 nm - 450 nm, more particularly 385 nm - 440 nm, more particularly 395 nm - 420, more particularly 400 nm - 410 nm, for instance. The light of the first wavelength can comprise a spectrum of wavelengths, particularly at least partly covering the respective ranges. As a concrete example, the first wavelength can be ca. 375 nm. Typically, the first wavelength will be chosen at least under consideration of the photochemical properties, particularly the photochromic properties, of molecules of at least one photoinitiator of the photocurable resin.

The light of the second wavelength can comprise a wavelength in the range of: 400 nm - 1000 nm, particularly 425 - 750 nm, more particularly 450 - 675 nm, more particularly 500 - 650 nm, for instance. The light of the second wavelength can comprise a spectrum of wavelengths, particularly at least partly covering the respective ranges. As an example, the second wavelength can be ca. 475 nm. Preferably, the light of the second wavelength can comprise a wavelength in a range which does not include the first wavelength. Typically, the second wavelength will be chosen at least under consideration of the photochemical properties, particularly the photochromic properties, of molecules of at least one photoinitiator of the photocurable resin.

The photocurable resin is irradiated with the light of the first wavelength and the light of the second wavelength such that the light of the first wavelength and the light of the second wavelength intersect in a formation zone. As such, the light of the first wavelength can be irradiated into the photocurable resin at a different angle relative to the light of the second wavelength. As an example, the light of the first wavelength can be irradiated into the photocurable resin at an angle of ca. 90° relative to the light of the second wavelength. The formation zone is typically, the zone in which the photopolymerization of the photocurable resin takes place which results in photocuring and/or solidification, respectively of the photocurable resin and forming at least a cross-section of the three-dimensional object to be printed.

Respective printing parameters can generally be or comprise parameters of the irradiation process which influence the spatial and/or temporal irradiation of the photocurable resin with the light of the first and the second wavelength. Respective printing parameters can additionally or alternatively be or comprise the number of irradiation steps in which one or more volume elements, e.g. voxels, of the photocurable resin are irradiated with the light of the first wavelength and/or with the light of the second wavelength. As such, respective printing parameters can be or comprise control parameters of a volumetric printing apparatus for implementing the method which concern the spatial and/or temporal irradiation of the photocurable resin with the light of the first and the second wavelength to form, by multi-color photopolymerization, particularly by dual-color photopolymerization, a three-dimensional object in at least one direction. Respective printing parameters can be or comprise control parameters of an irradiation device of a respective volumetric printing apparatus which irradiation device is configured to irradiate a photocurable resin with light of a respective first and second wavelength to form, by multi-color photopolymerization, a three-dimensional object in at least one direction. Respective printing parameters can also be or comprise control parameters of a drive device of a respective volumetric printing apparatus which drive device is configured to move the photocurable resin or a container containing the photocurable resin in the at least one direction, for instance.

The method comprises spatially and/or temporally varying at least one printing parameter, particularly at least one printing parameter influencing the curing or the curing behavior of the photocurable resin, during the irradiation process. The irradiation process of the method thus, comprises a concerted and deliberate spatial and/or temporal control of the irradiation process which comprises a concerted and deliberate variation of at least one printing parameter, particularly of at least one printing parameter influencing the curing behavior of the photocurable resin, during the irradiation process. A respective spatial and/or temporal variation of at least one printing parameter can also comprise a variation of the focus of the light of the first wavelength and/or a variation of the size of one or more images or one or more image elements, such as e.g. pixels, of the light of the second wavelength. A respective spatial and/or temporal variation of at least one printing parameter can also concern the number of irradiation steps in which one or more volume elements, e.g. voxels, of the photocurable resin are irradiated with the light of the first wavelength and/or the light of the second wavelength. As such, a respective spatial and/or temporal variation of at least one printing parameter can also comprise a variation of the number of irradiation steps in which one or more volume elements, e.g. voxels, of the photocurable resin are irradiated with the light of the first wavelength and/or the light of the second wavelength. A respective spatial and/or temporal variation of at least one printing parameter can also concern the motion direction and/or motion rate of the photocurable resin, particularly relative to a light sheet formed of the light of the first wavelength. As such, a respective spatial and/or temporal variation of at least one printing parameter can also comprise a variation of the motion direction and/or motion rate of the photocurable resin, particularly relative to a light sheet formed of the light of the first wavelength.

Based on the spatial and/or temporal variation of at least one printing parameter, the irradiation process can thus, comprise that at least one first portion of the three-dimensional object to be printed (first object portion) is printed with at least one different printing parameter relative to at least one further portion of the three-dimensional object to be printed (further object portion). A respective first object portion can comprise one or more first volume elements, e.g. voxels, of the photocurable resin which are located at one or more first positions within the photocurable resin. A respective further object portion can comprise one or more further volume elements, e.g. voxels, of the photocurable resin which are located at one or more further positions within the photocurable resin. Respective further volume elements can be volume elements which are located behind respective first volume elements in the formation direction.

Generally, the spatial and/or temporal variation of at least one printing parameter enables that each volume element of the photocurable resin can be irradiated with individual printing parameters, particularly printing parameters which influence e.g. the amount of energy, energy density, energy intensity, etc. the respective volume element is exposed to during the irradiation process.

The spatial and/or temporal variation of at least one printing parameter can comprise or enable that each volume element of the photocurable resin can be irradiated with an individual light intensity of the light of the second wavelength. As an example, the intensity of every pixel of one or more projected images of the light of the second wavelength can have a digital intensity value ranging from 0 to 1, wherein 0 refers to a black pixel of no intensity, 1 refers to a pixel with the highest intensity, typically denoted as white pixel, and a value between 0 and 1 refers to a pixel denoted as gray pixel with a lower intensity than a white pixel and a higher intensity than a black pixel. Notably, the terms "white", "gray", and "black" can refer to the light intensity. As such, the spatial and/or temporal variation of at least one printing parameter can comprise or enable gray-scaling (as will also be apparent from further below).

The printing parameters for a respective volume element of the photocurable resin can be chosen under consideration of the position of the respective volume element within the photocurable resin and within the three-dimensional object to be printed, respectively. As an example, one or more volume elements of the photocurable resin which are located adjacent or in proximity to uncured or not to be cured photocurable resin can be irradiated with different printing parameters than one or more volume elements of the photocurable resin which are adjacent or in proximity to cured or to be cured photocurable resin. In such a manner, the spatial and/or temporal variation of at least one printing parameter can particularly be implemented to consider the so-called proximity-effect which causes that a volume element in proximity to another volume element which has already been cured exhibits a specific curing behavior, e.g. an easier or faster curing, which is different from the curing behavior of a volume element which is not in proximity to another volume element which has already been cured or photopolymerized, respectively. Notably, the proximity-effect oftentimes causes undesired structural anisotropy and related undesired lower shrinkage and deformation, respectively of three-dimensional objects in conventional volumetric printing methods.

As such, the method specified herein enables, based on the spatial and/or temporal variation of at least one printing parameter during the irradiation process, printing three-dimensional objects with higher structural isotropy and lower undesired shrinkage and deformation, respectively such that the resulting three-dimensional objects show higher geometrical accuracy and structural fidelity, respectively.

Exemplary embodiments of the method and related examples will be specified in the following. Notably, one, more or all of the exemplary embodiments and examples can be arbitrarily combined.

According to an exemplary embodiment, the photocurable resin can be provided in a container delimiting a container volume. The container volume can comprise a working volume in which a three-dimensional object can be printed. One or more walls of the container can be made of a material which enables irradiating the photocurable resin inside the container with the light of the first and the second wavelength. A respective material can be a transparent material, for instance. A respective transparent material can be glass or a polymer, such as e.g. polycarbonate, polymethylmethacrylate, or cyclic olefin copolymer, for instance.

According to another exemplary embodiment, irradiating the photocurable resin with the light of the first wavelength causes one or more photoinitiator molecules of the photocurable resin to transfer from an initial state into an intermediate state with changed optical properties compared to the initial state, such that the molecules of the one or more photoinitiators in the intermediate state can absorb the light of the second wavelength which results in that the molecules of the one or more photoinitiators are transferred from the intermediate state to a reactive state by absorption of light of the second wavelength which locally triggers the polymerization of the photocurable resin to form at least one three-dimensional object.

As an example, the photocurable resin can be a photocurable monomer resin or a photocurable oligomer resin, which may include acrylates, methacrylates, thiol + ene, epoxides, oxiranes, oxetanes, or vinylethers, for instance. Multi-color photopolymerization can comprise multi-photon photopolymerization, particularly dual-photon photopolymerization, of the photocurable resin. Photopolymerization of the photocurable resin is typically, effected by irradiating the photocurable resin with the light of the first wavelength and, particularly simultaneously, the light of the second wavelength, which differs from the first wavelength, which results in that molecules of the one or more photoinitiators of the photocurable resin are converted, e.g., due to the absorption of the light of the first wavelength, from an initial state in which the molecules of the one or more photoinitiators (substantially) do not absorb the light of the second wavelength, into an intermediate state with changed optical properties compared to the initial state, such that the molecules of the one or more photoinitiators in the intermediate state absorb the light of the second wavelength which results in that the molecules of the one or more photoinitiators are transferred from the intermediate state to a reactive state which locally triggers the polymerization of the photocurable resin to form at least one three-dimensional object.

A back reaction of the molecules of the one or more photoinitiators from the intermediate state into the initial state can be thermally induced, for instance. Hence, the intermediate state may return thermally at the printing temperature of the photocurable resin to the initial state. Preferably, the intermediate state may return thermally at the respective printing temperature to the initial state in a reaction or reaction sequence with one or more rate constants with the highest rate constant higher than k=0.01 s⁻¹. Especially preferably, at least one rate constant for the thermal back reaction is higher than 0.02 s⁻¹, more preferably higher than 0.05 s⁻¹, even more preferably higher than 0.1 s⁻¹, still more preferably higher than 1.0 s⁻¹, most preferably higher than 5.0 s⁻¹. Hence, the rate constant may be in the range of 0.05 s⁻¹ and 1.0 s⁻¹, or any other range which may be formed from the values above. A high rate constant may result in an improved resolution of the printed three-dimensional object.

Alternatively, the intermediate state may substantially not return thermally at the respective printing temperature of the photocurable resin to the initial state. Preferably, the intermediate state may return thermally at the printing temperature to the initial state in a reaction or reaction sequence with one or more rate constants with at least one rate constant lower than k=100 s⁻¹. Especially preferably, at least one rate constant for the thermal back reaction is lower than 1 s⁻¹, more preferably lower than 0.1 s⁻¹, even more preferably lower than 0.01 s⁻¹, still more preferably lower than 0.001 s⁻¹, most preferably lower than 0.0001 s⁻¹. Hence, the rate constant may be in the range of 0.1 s⁻¹ and 0.0001 s⁻¹, or any other range which may be formed from the values above.

Further alternatively, the intermediate state may substantially not return thermally at the printing temperature of the photocurable resin to the initial state. Preferably, the intermediate state may return thermally at the printing temperature to the initial state in a reaction or reaction sequence with one or more rate constants with the highest rate constant lower than k=100 s⁻¹. Especially preferably, the highest rate constant for the thermal back reaction is lower than 1 s⁻¹, more preferably lower than 0.1 s⁻¹, even more preferably lower than 0.01 s⁻¹, still more preferably lower than 0.001 s⁻¹, most preferably lower than 0.0001 s⁻¹. Hence, the rate constant may be in the range of 0.1 s⁻¹ and 0.0001 s⁻¹, or any other range which may be formed from the values above.

Suitable photoinitiators of a respective photocurable resin are e.g. known from US5230986A, WO2020245456A1, WO2023034398A1, WO2023034404A1, WO2023034402A1, WO2023220461A1, WO2023220463A1, the contents of which are incorporated herein by reference.

According to another exemplary embodiment, the light of the first wavelength can comprise a light sheet comprising a plurality of light beams extending through the photocurable resin. Respective light beams can comprise two or more (substantially) parallel light beams. Respective light beams can comprise a light plane, for instance. A light plane can be or comprise a light plane in which the or a plurality of light beams, such as e.g. (substantially) parallel light beams, extend adjacent such that there is no intermediate space between directly adjacent light beams. Notably, at least some of the directly adjacent light beams can also partially overlap. Alternatively, a light plane can be or comprise a light plane in which the or a plurality of light beams extend adjacent such that there is an intermediate space between directly adjacent light beams. Respective light beams can be generated by a directed light emission device, such as e.g. a laser device, which can form part of an irradiation device of a volumetric printing apparatus used for implementing the method, for instance.

A respective light sheet or light beam, respectively can comprise a main extension which can be generally understood as the extension direction of the respective individual light sheet or light beam between opposing walls or wall portions of a container delimiting the working volume. Particularly, the main extension direction of each respective light sheet or light beam can be understood as the main propagation direction of the light of the light sheet or light beam between opposing walls or wall portions of a container delimiting the working volume. Hence, the main extension direction of a respective light sheet or light beam can correspond to a direction along a line which halves the divergence or divergence angle, respectively of the light sheet or light beam within the working volume.

The height direction or height extension of a respective light sheet or light beam can be generally understood as the direction with maximum spatial extension which extends orthogonal to the main extension direction. Particularly, the height direction or height extension can be a direction or extension parallel to a wall or wall portion of a container delimiting the working volume through which wall or wall portion, respectively the light sheet or light beam enters the working volume.

According to another exemplary embodiment, the light of the second wavelength can comprise a projection of images corresponding to a cross-sectional geometry of a three-dimensional object to be printed or a plurality of points or lines corresponding to a cross-sectional geometry of a three-dimensional object to be printed. Respective points or lines can form a pattern, such as e.g. a hatch pattern. A respective projection can be generated by a light projection device, such as e.g. a digital light projection device, which can form part of an irradiation device of a volumetric printing apparatus used for implementing the method. A respective point or line can be generated by a directed light emission device, such as e.g. a laser device, which can form part of an irradiation device of a volumetric printing apparatus used for implementing the method, for instance.

According to another exemplary embodiment, the at least one formation zone is moved along the at least one direction, particularly relative to a respective container (as indicated above) comprising the photocurable resin, at a nominal motion rate. The at least one direction can comprise the or a formation direction of the three-dimensional object to be printed. Motion of the at least one formation zone can e.g. be relative to at least one functional component of a volumetric printing apparatus used for implementing the method. A respective functional component of a respective volumetric printing apparatus can be a respective container or an irradiation device, for instance. As such, during the irradiation process, the at least one formation zone can be actively moved along the at least one direction, particularly the formation direction, at a nominal motion rate through at least one part of the container volume, while the container is stationary. Alternatively, during the irradiation process, the container can be actively moved along the at least one direction, particularly the formation direction, while the at least one formation zone is stationary. Further alternatively, both the at least one formation zone and the container can be actively moved, wherein the at least one formation zone and the container can be moved in the same direction or in opposite directions. Also the nominal motion rate and/or motion direction at which the at least one formation zone and/or the container is moved along the at least one direction, particularly relative to the container, can be an example of a printing parameter because the nominal motion rate and particularly, spatial and/or temporal variations of the nominal motion rate can also influence the curing behavior of the photocurable resin. Additionally or alternatively it is also possible that the or a second irradiation apparatus of the dual-color irradiation device of the apparatus can be actively moved along the at least one direction, particularly the formation direction, while at least one of the container or the at least one formation zone is actively moved. Moving the or a second irradiation apparatus of the dual-color irradiation device of the apparatus can be a means to implement a focus correction of the light of the second wavelength. As such, also embodiments are contemplated in which each of the or a second irradiation apparatus of the dual-color irradiation device of the apparatus, the at least one formation zone and the container are actively moved before, during or after the at least one irradiation process. Respective motions can be controlled by the or a controller of the apparatus.

According to another exemplary embodiment, spatially and/or temporally varying the at least one printing parameter, particularly a printing parameter influencing the curing (behavior) of the photocurable resin, can comprise that the photocurable resin is irradiated with the light of the first wavelength before it is irradiated with the light of the second wavelength. Hence, the variation of at least one printing parameter can comprise that the photocurable resin is spatially and/or temporally irradiated with the light of the first wavelength before it is irradiated with the light of the second wavelength. As such, one or more volume elements of the three-dimensional object to be printed can be irradiated with the light of the first wavelength before these volume elements are irradiated with the light of the second wavelength. Respective one or more volume elements of the photocurable resin can particularly, comprise the first volume elements of the three-dimensional object to be printed. In other words, the irradiation process can comprise that one or more volume elements can be (only) irradiated with the light of the first wavelength spatially and/or temporally before subsequent volume elements are irradiated with the light of the first wavelength (and typically, also with the light of the second wavelength). Irradiating volume elements of the photocurable resin with the light of the first wavelength only can result in a pre-activation of these volume elements which results in improved curing of these volume elements when they are subsequently irradiated with both the light of the first and the second wavelength and thus, result in improved structural properties of the respective three-dimensional object to be printed.

An example of irradiating the photocurable resin with the light of the first wavelength (spatially) before it is irradiated with the light of the second wavelength can comprise that irradiating the photocurable resin with the light of the first wavelength starts at a first position p1 and that irradiating the photocurable resin with the light of the second wavelength starts at a second position p2, wherein the second position p2 is located behind the first position p1 in the formation direction. The second position is typically, a position within a volume of the photocurable resin which forms the respective three-dimensional object to be printed and thus, a position inside the respective three-dimensional object to be printed. Particularly, the second position can be a position within a volume of the photocurable resin which forms an outer boundary or edge of the respective three-dimensional object to be printed and thus, a position at a surface of the respective three-dimensional object to be printed. As such, the three-dimensional object to be printed can comprise portions which are located behind the second position with respect to the formation direction or the three-dimensional object is formed behind the second position with respect to the formation direction, respectively. Hence, the second position can comprise the first volume element, such as e.g. the first voxel, of the three-dimensional object to be printed with respect to the formation direction. The first position can also be a position within a volume of the photocurable resin which forms the respective three-dimensional object to be printed and thus, a position inside the respective three-dimensional object to be printed. Particularly, the first position is a position within a volume of the photocurable resin which does not form the respective three-dimensional object to be printed and thus, a position outside the respective three-dimensional object to be printed.

Another example of irradiating the photocurable resin with the light of the first wavelength (temporally) before it is irradiated with the light of the second wavelength can comprise that irradiating the photocurable resin with the light of the first wavelength starts at a first time t1 and that irradiating the photocurable resin with the light of the second wavelength starts at a second time t2, wherein t2 > t1. The second time typically, corresponds to a time at which a volume of the photocurable resin which forms the respective three-dimensional object to be printed is irradiated. Particularly, the second time can correspond to a time at which a volume of the photocurable resin which forms an outer boundary or edge of the respective three-dimensional object to be printed and thus, a position at a surface of the respective three-dimensional object to be printed is irradiated. As such, the three-dimensional object to be printed can comprise portions which are to be printed after the second time or the printing of the three-dimensional object is completed after the second time, respectively. Hence, the second time can comprise a time at which the first volume element, such as e.g. the first voxel, of the three-dimensional object to be printed is printed with respect to the formation direction. The first time can also correspond to a time at which a volume of the photocurable resin which forms the respective three-dimensional object to be printed is irradiated. Yet, the first time can also correspond to a time at which a volume of the photocurable resin which does not form the respective three-dimensional object to be printed is irradiated.

According to another exemplary embodiment, spatially and/or temporally varying the at least one printing parameter, particularly a printing parameter influencing the curing (behavior) of the photocurable resin, can comprise that the photocurable resin is irradiated with the light of the first wavelength after it is irradiated with the light of the second wavelength. Hence, the variation of at least one printing parameter can comprise that the photocurable resin is spatially and/or temporally irradiated with the light of the first wavelength after it is irradiated with the light of the second wavelength. As such, one or more volume elements of the three-dimensional object to be printed can be irradiated with the light of the first wavelength after these volume elements have been irradiated with the light of the second wavelength. Respective one or more volume elements of the photocurable resin can particularly, comprise the last volume elements of the three-dimensional object to be printed. In other words, the irradiation process can comprise that one or more volume elements can be (only) irradiated with the light of the first wavelength spatially and/or temporally after previous volume elements have been irradiated with the light of the second wavelength (and typically, also the light of the first wavelength). Irradiating volume elements of the photocurable resin with the light of the first wavelength only can result in a post-activation of these volume elements which results in further curing of these volume elements after they have been irradiated with both the light of the first and the second wavelength and thus, result in improved structural properties of the respective three-dimensional object to be printed.

An example of irradiating the photocurable resin with the light of the first wavelength (spatially) after it is irradiated with the light of the second wavelength can comprise that irradiating the photocurable resin with the light of the second wavelength ends at a third position p3 and that irradiating the photocurable resin with the light of the first wavelength ends at a fourth position p4, wherein the fourth position p4 is behind the third position p3 in the formation direction. The third position is typically, a position within a volume of the photocurable resin which forms the respective three-dimensional object to be printed and thus, a position inside the respective three-dimensional object to be printed. Particularly, the third position can be a position within a volume of the photocurable resin which forms an outer boundary or edge of the respective three-dimensional object to be printed and thus, a position at a surface of the respective three-dimensional object to be printed. As such, the three-dimensional object to be printed can comprise portions which are located in front of the third position with respect to the formation direction or the three-dimensional object is formed in front of the third position with respect to the formation direction, respectively. Hence, the third position can comprise the last volume element, such as e.g. the last voxel, of the three-dimensional object to be printed with respect to the formation direction. The fourth position can also be a position within a volume of the photocurable resin which forms the respective three-dimensional object to be printed and thus, a position inside the respective three-dimensional object to be printed. Particularly, the fourth position is a position within a volume of the photocurable resin which does not form the respective three-dimensional object to be printed and thus, a position outside the respective three-dimensional object to be printed.

Another example of irradiating the photocurable resin with the light of the first wavelength (temporally) after it is irradiated with the light of the second wavelength can comprise that irradiating the photocurable resin with the light of the second wavelength ends at a third time t3 and that irradiating the photocurable resin with the light of the first wavelength ends at a fourth time t4, wherein t4 > t3. The third time typically, corresponds to a time at which a volume of the photocurable resin which forms the respective three-dimensional object to be printed is irradiated. Particularly, the third time can correspond to a time at which a volume of the photocurable resin which forms an outer boundary or edge of the respective three-dimensional object to be printed and thus, a position at a surface of the respective three-dimensional object to be printed is irradiated. As such, the three-dimensional object to be printed can comprise portions which are to be printed before the third time or the printing of the three-dimensional object is completed before the third time, respectively. Hence, the third time can comprise a time at which the last volume element, such as e.g. the last voxel, of the three-dimensional object to be printed is printed with respect to the formation direction. The fourth time can also correspond to a time at which a volume of the photocurable resin which forms the respective three-dimensional object to be printed is irradiated. Yet, the fourth time can also correspond to a time at which a volume of the photocurable resin which does not form the respective three-dimensional object to be printed is irradiated.

As such, spatially and/or temporally varying the at least one printing parameter, particularly a printing parameter influencing the curing behavior of the photocurable resin, can comprise that the photocurable resin is irradiated with the light of the first wavelength, particularly only with the light of the first wavelength, in a volume separate, particularly adjacent, more particularly directly adjacent, to the volume in which the three-dimensional object is to be printed, particularly wherein the volume is spatially and/or temporally before and/or behind the volume in which the three-dimensional object is to be printed with respect to the at least one formation direction of the three-dimensional object. In such a manner, pre- or post-activating the photocurable resin can be effected which can positively influence the structural properties of the three-dimensional object to be printed.

Thus, spatially and/or temporally irradiating the photocurable resin with the light of the first wavelength before or after it is irradiated with the light of the second wavelength can generally comprise that volume elements of the photocurable resin which volume elements do not form part of a three-dimensional object to be printed can be irradiated (only) with the light of the first wavelength. Such volume elements can be positioned, with respect to the formation direction of a three-dimensional object to be printed, before or in front of the volume elements which form part of the respective three-dimensional object to be printed, preferably before or in front of the first volume element of the three-dimensional object to be printed with respect to the formation direction, or after or behind the volume elements which form part of the respective three-dimensional object to be printed, preferably behind or after the last volume element of the three-dimensional object to be printed with respect to the formation direction.

It is also conceivable though that volume elements of the photocurable resin which volume elements do not form part of a three-dimensional object to be printed can be irradiated (only) with the light of the second wavelength such that the above remarks can also accordingly apply to the light of the second wavelength.

According to another exemplary embodiment, spatially and/or temporally varying the at least one printing parameter, particularly a printing parameter influencing the curing behavior of the photocurable resin, can comprise irradiating the photocurable resin with the light of the first wavelength and/or the second wavelength and spatially and/or temporally varying the energy, particularly the energy intensity, of the light of the first wavelength and/or the second wavelength, along the at least one direction. Spatially and/or temporally varying the energy, particularly the energy intensity, of the light of the first wavelength and/or the second wavelength, along the at least one direction can also positively influence the structural properties of the three-dimensional object to be printed, e.g. because it enables a control that each volume element of a three-dimensional object to be printed obtains a specific amount of energy which results in a desired curing of the respective volume element. As such, problems based on different degrees of curing of different volume elements of a three-dimensional object to be printed, which typically also lead to undesired structural anisotropy of the three-dimensional object, can be overcome or at least reduced. Likewise, the proximity-effect (as explained further above) can be overcome or at least reduced because one or more volume elements in proximity to other volume elements which have already been cured or photopolymerized, respectively can be irradiated with a different energy relative to one or more volume elements which are not in proximity to other volume elements which have already been cured or photopolymerized, respectively.

Particularly, spatially and/or temporally varying the energy or energy intensity, respectively can comprise that the energy level of the light of the first wavelength can be varied from a first energy level to at least a second energy level, the at least one second energy level being higher or lower than the first energy level. Hence, the energy or energy intensity, respectively of the light of the first wavelength can be dynamically or gradually spatially and/or temporally increased or decreased during the irradiation process, particularly with respect to a nominal value which can be, but is not limited to, a minimum or maximum energy or energy intensity, respectively.

Additionally or alternatively, spatially and/or temporally varying the energy or energy intensity, respectively of the second wavelength can comprise that the energy level of the light of the second wavelength can be varied from a first energy level to at least a second energy level, the at least one second energy level being higher or lower than the first energy level. Hence, the energy or energy intensity, respectively of the light of the second wavelength can be dynamically or gradually spatially and/or temporally increased or decreased during the irradiation process, particularly with respect to a nominal value which can be, but is not limited to, a minimum or maximum energy level or energy intensity level, respectively.

As an example, spatially and/or temporally varying the energy, particularly the energy intensity, of the light of the second wavelength along the at least one direction can comprise that one or more image elements, e.g. pixels, of respective images corresponding to a cross-sectional geometry of a three-dimensional object to be printed are spatially and/or temporally varied with respect to their energy or energy density, respectively. In other words, a respective projection of one or more images can comprise image elements of different energy or energy density, respectively. Varying the energy or energy density, respectively of respective image elements can comprise energy levels or energy density levels, respectively between minimum energy levels or minimum energy density levels, respectively and maximum energy levels or maximum energy density levels, respectively. Likewise, varying the energy or energy density, respectively of respective lines or points can comprise varying the energy levels or energy density levels, respectively between minimum energy levels or minimum energy density levels, respectively and maximum energy levels or maximum energy density levels, respectively. Varying the energy or energy density, respectively of respective image elements or points or lines, respectively can be effected by controlling a respective irradiation device used for generating respective projections of images or points or lines, respectively.

As another example, spatially and/or temporally varying the energy, particularly the energy intensity, of the light of the second wavelength along the at least one direction can comprise that one or more image elements, e.g. pixels, of respective images which correspond to a cross-sectional geometry of a three-dimensional object to be printed and/or one or more image elements, e.g. pixels, of respective images which do not correspond to a cross-sectional geometry of a three-dimensional object to be printed can be spatially and/or temporally varied such that the energy or energy intensity, respectively does not effect curing of the photocurable resin. Hence, spatially and/or temporally varying the energy, particularly the energy intensity, of the light of the second wavelength can comprise that the energy or energy intensity, respectively can be spatially and/or temporally set to a level which does not result in curing of the photocurable resin or to a level which results in undercuring of the photocurable resin. Yet, it is also conceivable that spatially and/or temporally varying the energy, particularly the energy intensity, of the light of the second wavelength can comprise that the energy or energy intensity, respectively can be spatially and/or temporally set to a level which results in overcuring of the photocurable resin. Particularly, spatially and/or temporally varying the energy, particularly the energy intensity, of the light of the second wavelength along the at least one direction can comprise that the first volume elements of the three-dimensional object to be printed with respect to the formation direction are irradiated with light of the second wavelength having a higher intensity than further volume elements of the three-dimensional object to be printed. In such a manner, a means for compensating the proximity-effect is given.

According to another exemplary embodiment, the photocurable resin can be irradiated with the light of the first wavelength at the first energy level, which can be a comparatively higher energy level compared to a nominal energy level or a second energy level, in an initial volume of the to be printed three-dimensional object which initial volume comprises at most 10%, particularly at most 9%, more particularly at most 8%, more particularly at most 7%, more particularly at most 6%, more particularly at most 5%, more particularly at most 4%, more particularly at most 3%, more particularly at most 2%, more particularly at most 1%, more particularly at most 0.9%, more particularly at most 0.8%, more particularly at most 0.7%, more particularly at most 0.6%, more particularly at most 0.5%, more particularly at most 0.4%, more particularly at most 0.3%, more particularly at most 0.2%, more particularly at most 0.1%, more particularly at most at most 0.09%, more particularly at most 0.08%, more particularly at most 0.07%, more particularly at most 0.06%, more particularly at most 0.05%, more particularly at most 0.04%, more particularly at most 0.03%, more particularly at most 0.02%, more particularly at most 0.01%, of the spatial extension of the three-dimensional object to be printed in the at least one direction. Irradiating the photocurable resin with the light of the first wavelength at a higher energy level in an initial volume of the to be printed three-dimensional object in the at least one direction can particularly, result in compensation or at least reduction of the proximity-effect, for instance and thus, lead to three-dimensional objects with less structural anisotropy and improved structural properties.

Additionally or alternatively, the photocurable resin can be irradiated with the light of the first wavelength at the first energy level, which can be a comparatively higher energy level compared to a nominal energy level or a second energy level, for an initial time of at most 10 sec, particularly at most 9 sec, more particularly at most 8 sec, more particularly at most 7 sec, more particularly at most 6 sec, more particularly at most 5 sec, more particularly at most 4 sec, more particularly at most 3 sec, more particularly at most 2 sec, more particularly at most 1 sec, more particularly at most 0.9 sec, more particularly at most 0.8 sec, more particularly at most 0.7 sec, more particularly at most 0.6 sec, more particularly at most 0.5 sec, more particularly at most 0.4 sec, more particularly at most 0.3 sec, more particularly at most 0.2 sec, more particularly at most 0.1 sec, more particularly at most at most 0.09 sec, more particularly at most 0.08 sec, more particularly at most 0.07 sec, more particularly at most 0.06 sec, more particularly at most 0.05 sec, more particularly at most 0.04 sec, more particularly at most 0.03 sec, more particularly at most 0.02 sec, more particularly at most 0.01 sec, of the overall duration of the irradiation process, particularly the overall duration of the period of the irradiation process in which the photocurable resin is cured by multi-color photopolymerization to print a three-dimensional object. The respective times can correspond to periods of the irradiation process in which at least the first frame, particularly at most the first 100 frames, more particularly at most the first 90 frames, more particularly at most the first 80 frames, more particularly at most the first 70 frames, more particularly at most the first 60 frames, more particularly at most the first 50 frames, more particularly at most the first 40 frames, more particularly at most the first 30 frames, more particularly at most the first 20 frames, more particularly at most the first 10 frames, of a projection of images of the light of the second wavelength is irradiated into the photocurable resin.

According to another exemplary embodiment, spatially and/or temporally varying the at least one printing parameter, particularly a printing parameter influencing the curing behavior of the photocurable resin, can comprise varying a focus parameter, such as e.g. the size and/or the position, of the or a focus of the light of the first wavelength and/or varying an image parameter, e.g. the size and/or the position, of an image or of at least one image element, e.g. a pixel, of an image projected with the light of the second wavelength. Hence, a focus parameter, such as e.g. the size and/or the position, focal length, depth of focus, depth of field, of the or a focus of the light of the first wavelength, which can comprise a plurality of light beams, particularly a plurality of (substantially) parallel light beams, extending through the photocurable resin, e.g. in the shape of a light sheet, can be a printing parameter which can be varied during the irradiation process which enables e.g. spatially and/or temporally influencing the curing result in the formation zone and the resolution of features of the three-dimensional object to be printed, respectively. Varying one or more focus parameters of the light of the first wavelength can be implemented by one or more optical elements, such as e.g. (moveable) lenses, assigned to the irradiation device used for generating the light of the first wavelength and respective light beams extending through the photocurable resin, for instance. Respective optical elements can form part of a focus adjusting device of the irradiation device which can be configured for adjusting one or more focus parameters of the light of the first wavelength. Additionally or alternatively, an image parameter, such as e.g. the size and/or the position, of the or a projected image or at least one image element of the light of the second wavelength, which can comprise a projection of images corresponding to a cross-sectional geometry of a three-dimensional object to be printed, can be a printing parameter which can be varied during the irradiation process which enables e.g. spatially and/or temporally influencing the curing result in the formation zone and the resolution of features of the three-dimensional object to be printed, respectively. Varying one or more image parameters of an image of the light of the second wavelength can be implemented with one or more optical elements, such as e.g. (moveable) lenses, pixel generators, etc., assigned to the irradiation device used for generating the light of the second wavelength and respective images corresponding to a cross-sectional geometry of a three-dimensional object to be printed, for instance. Respective optical elements can form part of an image adjusting device of the irradiation device which can be configured for adjusting one or more image parameters of the light of the second wavelength. A respective image adjusting device can be a hardware- and/or software-embodied component of a light projection device, such as e.g. a digital light projection device, for instance.

According to another exemplary embodiment, spatially and/or temporally varying the energy of the light of the second wavelength can comprise varying the energy or energy distribution of at least a part, e.g. a pixel, of at least one projected image corresponding to a cross-sectional geometry of a three-dimensional object to be printed or of at least one point or line of at least one light beam corresponding to a cross-sectional geometry of a three-dimensional object to be printed. Particularly, the energy of the light of the second wavelength can be varied along the at least one direction such that, with respect to the formation direction, upstream portions of the three-dimensional object to be printed are exposed to different energy levels of the light of the second wavelength as downstream portions of the three-dimensional object to be printed. As indicated above, spatially and/or temporally varying the energy of the light of the second wavelength can lead to three-dimensional objects with less structural anisotropy and improved structural properties.

As an example, spatially and/or temporally varying the energy or energy intensity, respectively of the light of the second wavelength can comprise varying the energy or energy intensity, respectively of at least a part of at least one image, particularly at least one image element, e.g. a pixel, of the image, in a sequence comprising at least three energy levels E1, E2, and E3 or energy intensity levels, respectively E1, E2, and E3, wherein the energy level or energy intensity level, respectively is changed from E1 to E2, with E2>E1, and wherein the energy level or energy intensity level, respectively is changed from E2 to E3 and E2>E3 and particularly E3>E1 or E1=0, for instance. Particularly, the first energy level E1 can be assigned to one or more volume elements of the photocurable resin in which no or only little photopolymerization of the photocurable resin is desired; such volume elements of the photocurable resin can comprise volume elements which do not form part of a three-dimensional object to be printed. As such, the first energy level can also be (substantially) zero (E1=0). Particularly, the second energy level E2 can be assigned to one or more volume elements of the photocurable resin which do form part of a three-dimensional object to be printed. Specifically, the second energy level E2 can be assigned to one or more volume elements of the photocurable resin which form part of at least the first volume element of a three-dimensional object to be printed or the first volume element of a portion of the three-dimensional object to be printed with respect to the formation direction. Specifically, the third level E3 can be assigned to one or more volume elements of the photocurable resin which form part of further volume elements of the three-dimensional object to be printed which further volume elements are located behind the first volume element of three-dimensional to be printed with respect to the formation direction. Further, a fourth energy level E4 can be implemented and assigned to one or more volume elements of the photocurable resin which do not form part of the three-dimensional to be printed. Particularly, the fourth energy level E4 can be assigned to volume elements of the photocurable resin which are located behind the last volume elements of the photocurable resin which form part of the three-dimensional object to be printed. As such, the fourth energy level E4 can also be (substantially) zero (E4=0).

According to another exemplary embodiment, spatially and/or temporally varying the at least one printing parameter, particularly a printing parameter influencing the curing behavior of the photocurable resin, can comprise irradiating the photocurable resin with the light of the first wavelength and/or the light of the second wavelength while the at least one formation zone is not moving relative to the or a respective container during the irradiation process or while the at least one formation zone is moved at a varied motion rate which is lower than the nominal motion rate. A respective varied motion rate can also be zero. Hence, also the motion rate at which the at least one formation zone is moved, particularly relative to the or a respective container, is a printing parameter which can be spatially and/or temporally varied, e.g. to achieve printing three-dimensional objects having higher structural isotropy.

As an example, irradiating the photocurable resin with the light of the first wavelength and/or the light of the second wavelength while the at least one formation zone is not moving relative to the or a respective container during the irradiation process or while the at least one formation zone is moving at a motion rate which is lower than the nominal motion rate can comprise irradiating the photocurable resin with the light of the first wavelength while the photocurable resin moves comparatively slow or does not even move relative to the container such that the respective volume elements of the photocurable resin are irradiated with the light of the first wavelength for a comparatively long period. In this period, the light of the second wavelength can comprise constant images or stationary images, for instance. Alternatively, in this period, no light of the second wavelength is irradiated into the photocurable resin and the working volume, for instance.

According to another exemplary embodiment, spatially and/or temporally varying the at least one printing parameter, particularly a printing parameter influencing the curing behavior of the photocurable resin, can also comprise irradiating the photocurable resin with the light of the first and/or second wavelength while the at least one formation zone is moved along two different directions. Hence, also the motion direction along which the at least one formation zone is moved, particularly relative to the or a respective container, is a printing parameter which can be spatially and/or temporally varied, e.g. to achieve printing three-dimensional objects having higher structural isotropy.

As an example, the at least one formation zone can be moved along a first motion path in a first motion direction while it is irradiated with the light of the first and/or the second wavelength, particularly while it is irradiated only with the light of the first wavelength, and the at least one formation zone is moved along a second motion path in a second motion direction, particularly opposite the first direction, while it is irradiated with the light of the first and/or the second wavelength, particularly while it is irradiated with the light of both the first and second wavelength. Particularly, the first motion direction can be a motion direction towards or away from an irradiation device, particularly a digital light projection device, of an apparatus used for implementing the method which generates the light of the second wavelength and the second motion direction can be opposition thereto, or vice versa.

As another example, the first motion path can differ, particularly in length, from the second motion path. Particularly, the first motion path can be shorter than the second motion path. As such, the irradiation of the photocurable resin with the light of the first wavelength applied to the photocurable resin when the at least one formation zone is moved along the first motion path can be shorter compared to when the at least one formation zone is moved along the second motion path.

According to another exemplary embodiment, spatially and/or temporally varying the at least one printing parameter, particularly a printing parameter influencing the curing behavior of the photocurable resin, can comprise, which particularly applies for embodiments of the method in which multiple separate three-dimensional objects are to be printed, particularly simultaneously, e.g. by setting, that the start position and/or the start time and/or the end position and/or the end time for irradiating the photocurable resin with the light of the second wavelength for printing a first three-dimensional object can be different from the start position and/or the start time for irradiating the photocurable resin with the light of the second wavelength for printing a further three-dimensional object. Particularly, the exemplary embodiment can enable that the photocurable resin is still irradiated with light of the second wavelength, even though printing of at least one three-dimensional object has been completed which will result in that the respective three-dimensional object which has been completed first will have a high(er) structural fidelity. Notably, this exemplary embodiment particularly applies to lateral arrangement of the multiple three-dimensional objects to be printed. As such, their respective formation directions are arranged in parallel.

According to another exemplary embodiment, spatially and/or temporarily varying the at least one printing parameter, particularly a printing parameter influencing the curing behavior of the photocurable resin, can be realized by printing at least one auxiliary object. Particularly, printing of the at least one auxiliary object can be spatially and/or temporarily started before the actual three-dimensional object, i.e. the three-dimensional object which is actually to be manufactured, is printed. More particularly, printing of the at least one auxiliary object can be completed before the printing of the actual three-dimensional object is started. In either case, the at least one auxiliary object can be printed in a first volume of the container and the actual three-dimensional object to be printed can be printed a second volume of the container, wherein the second volume is located spatially and/or temporarily behind and/or after the first volume. As such, printing of the at least one auxiliary object can comprise that a light sheet of the light of first wavelength is first moved through the first volume along the at least one direction, particularly relative to a respective container (as indicated above) comprising the photocurable resin, to generate the at least one auxiliary object by multi-color photopolymerization (as specified above) and then the light sheet of the light of first wavelength is moved through the second volume. When the light of first wavelength is moved through the second volume, the intensity of the light of the second wavelength can be zero or at least (significantly) reduced such that the photocurable resin in the second volume is (essentially) only subject to the light of the first wavelength.

The actual three-dimensional object can be printed with one or more target properties, which are typically, defined with respect to an intended application or use of the three-dimensional object. As an example, the actual three-dimensional object can have a target shape or optical properties, which are defined with respect to an intended application or use of the three-dimensional object as an optical element. The at least one auxiliary object can differ in at least one property from the one or more target properties. Referring to the aforementioned example, the at least one auxiliary object can thus, deviate from the intended shape or have lower optical properties than the actual three-dimensional object to be printed. As such, the quality requirements for the at least one auxiliary object can be lower than the quality requirements for the actual three-dimensional object to be printed.

The at least one auxiliary object can have a longitudinal shape having a spatial extension direction along the motion direction of the light sheet through the container. As an example, the at least one auxiliary object can be or comprise a stick-shape having a spatial extension direction along the motion direction of the light sheet through the container. In either case, the volume of the at least one auxiliary object can be smaller than the volume of the actual three-dimensional object to be printed. As an example, the volume of the at least one auxiliary object can be at least one of: 1/2, 1/3, 1/4, 1/5, 1/6, 1/7, 1/8, 1/9, 1/10, etc., of the volume of the actual three-dimensional object to be printed.

The at least one auxiliary object can be or comprise a sacrificial object, which can be discarded after printing. Particularly, the at least one auxiliary object can be attached to the at least one three-dimensional object to be printed. As such, there can be one or more connection portions, such as e.g. one or more connection points, one or more connection lines, or one or more connection areas, via which the at least one auxiliary object is physically connected with the actual three-dimensional object. Respective connection portions can comprise predetermined separation or breaking structures which enable, removing the at least one auxiliary object from the actual three-dimensional object, e.g. via breaking, after printing of the actual three-dimensional object is completed. Alternatively, the at least one auxiliary object can also be adjacently arranged, i.e. spatially offset, relative to the at least one three-dimensional object to be printed such that there are no connection portions via which the at least one auxiliary object is physically connected with the actual three-dimensional object. The distance between the at least one auxiliary object and the actual three-dimensional object to be printed can be small, preferably <10 mm, more preferably <5 mm, even more preferably below 1 mm, still more preferably <500 µm, most preferably < 100 µm.

The at least one auxiliary object can be provided with at least one function. As an example, the at least one auxiliary object can be provided with a supporting function which can enable supporting a three-dimensional object attached thereto, e.g. for purposes of removing the three-dimensional object from a container.

According to another exemplary embodiment, spatially and/or temporarily varying the at least one printing parameter, particularly a printing parameter influencing the curing behavior of the photocurable resin can comprise an inhomogeneous variation of the temperature and/or density of the photocurable resin within the container. As such, the photocurable resin can have a higher temperature and/or density in a location L1 compared to a location L2, particularly at the same time, especially at the start time of the print of the three-dimensional object. This can be realized by printing at least one auxiliary object, particularly a sacrificial object as indicated above, first and printing the actual three-dimensional object thereafter. The at least one auxiliary object can have a shape and/or size which can be adapted to the actual three-dimensional object to printed. Particularly, the at least one auxiliary object can have the shape of a plate, e.g. a rectangular, polygonal or round plate. The position and/or orientation of the plate within the container can be such that a normal on the main extension plane is (substantially) parallel to the at least one direction along which the at least one formation zone is moved relative to the container (as indicated above) comprising the photocurable resin. This enables that any thermal energy, e.g. heat generated by polymerization of the photocurable resin, generated when printing the at least one auxiliary object can effect a temperature change, particularly a temperature increase and/or temperature gradient, in the volume in which the at least one three-dimensional object is to be printed.

Particularly, the surface of at least one auxiliary object can have an inverted shape of the surface of the actual three-dimensional object to be printed, particularly the or an opposing surface of the three-dimensional object to be printed. As an example, when the actual three-dimensional object to be printed has a surface with a concave shape, the at least one auxiliary object can have a surface with a convex shape.

Surprisingly, it has been found that printing at least one auxiliary object first and the actual three-dimensional object to be printed thereafter can lead to an improved structural fidelity of the actual three-dimensional object. Without being bound by any theory, this is explained by the fact that during the polymerization of photocurable resin to generate the at least one auxiliary object, the temperature of the photocurable resin in volume in which the actual three-dimensional object is to be generated can increase due to heat of polymerization, which leads to an expansion of the surrounding photocurable resin in proximity to already printed portions of the object. Therefore, portions of the actual three-dimensional object which are printed later will be generated in an expanded resin (the expansion resulting from the temperature increase). Printing at least one auxiliary object before the actual three-dimensional object, can lead to an expansion of the resin in the volume in which the actual three-dimensional object is to be printed, such that first portions of the three-dimensional object can be generated in already expanded resin, which can lead to a more homogeneous shrink after cooling equilibration of the photocurable resin.

According to another exemplary embodiment, the irradiation process can comprise irradiating the photocurable resin with the light of the first wavelength and the light of the second wavelength to form a pre-polymerized three-dimensional pre-object in a first irradiation step, and wherein the pre-polymerized three-dimensional pre-object is irradiated with the light of the first wavelength and the second wavelength in at least one further irradiation step which causes formation of the three-dimensional object, particularly after completion of the first irradiation step and/or after completion of the at least one further irradiation step, more particularly after completion of a first further irradiation step of a plurality of further irradiation steps. As such, also the number of respective irradiation steps can be a printing parameter which can be spatially and/or temporally varied. Notably, this embodiment can comprise the formation of a pre-polymerized three-dimensional pre-object in a first irradiation step, which three-dimensional pre-object can already comprise a shape and/or dimension (substantially) corresponding to the three-dimensional object which is to be printed. However, the three-dimensional pre-object can differ from the actual three-dimensional object which is to be printed in the degree of curing of the photocurable resin. In other words, the three-dimensional pre-object can have a lower degree of curing of the photocurable resin, e.g. the three-dimensional pre-object can have a degree of curing which does not allow handling of the three-dimensional pre-object for instance. Yet, printing the actual three-dimensional object via a respective intermediate pre-object can result in improved structural properties of the actual three-dimensional object.

As an example, the photocurable resin can be irradiated with the light of the first wavelength and the second wavelength to form a pre-polymerized three-dimensional pre-object in a first irradiation step, wherein the pre-polymerized three-dimensional pre-object is irradiated with the light of the first wavelength and the second wavelength which causes further polymerization of the pre-polymerized three-dimensional object in a second irradiation step, and wherein the second irradiation step can be repeated multiple times. Notably, the formation zone can be moved along a first motion path in a first motion direction in the first irradiation step and along a second motion path in a second motion direction, particularly opposite the first motion direction, in the at least one second irradiation step.

Generally, the photocurable resin can be irradiated with the light of the first wavelength forming a pre-polymerized photocurable resin in a first irradiation step, and wherein the pre-polymerized photocurable resin is irradiated with the light of the first wavelength and the second wavelength in at least one further irradiation step which causes formation of the three-dimensional object, particularly after completion of the first irradiation step and/or after completion of the at least one further irradiation step, more particularly after completion of a first further irradiation step of a plurality of further irradiation steps.

Particularly, the photocurable resin can be irradiated with the light of the first and the second wavelength forming a pre-polymerized photocurable resin in a first irradiation step, and wherein the pre-polymerized photocurable resin is irradiated with the light of the first wavelength and the second wavelength in at least one further irradiation step which causes formation of the three-dimensional object, particularly after completion of the first irradiation step and/or after completion of the at least one further irradiation step, more particularly after completion of a first further irradiation step of a plurality of further irradiation steps. Particularly, the light intensity of the first and/or second wavelength in the first irradiation step can be of an intensity lower than the intensity required for curing or solidification of the photocurable resin or the intensity of the light of first and/or second wavelength required for causing formation of the three-dimensional object, respectively. Particularly, in the first irradiation step the intensity distribution of the light of the second wavelength is inhomogeneous. More particularly, in the first irradiation step, the light of the second wavelength can have a lower intensity in outer regions adjacent to the walls of the container delimiting the working volume and a respectively higher intensity in inner regions of the working volume, such as e.g. in the middle of the working volume. As an example, the light of the second wavelength can be projected as an image having higher intensity in respective inner regions. A respective image can be a gray or white image, for example. Also printing the actual three-dimensional object via a respective intermediate pre-polymerized photocurable resin can result in improved structural properties of the actual three-dimensional object.

According to another exemplary embodiment, spatially and/or temporarily varying the at least one printing parameter, particularly a printing parameter influencing the curing behavior of the photocurable resin can comprise an inhomogeneous intensity distribution of the light of the second wavelength, particularly in a direction orthogonal to the formation direction. Particularly, pixels of a projection or projected image of the light of the second wavelength can have a lower intensity in outer regions adjacent to the walls of the container delimiting the working volume and a higher intensity in inner regions of the working volume, such as e.g. in the middle of the container delimiting the working volume. As indicated above, the light of the second wavelength can be projected as an image, wherein the image has pixels of a higher intensity in respective inner image regions, particularly including a center of the image, and pixels of a lower intensity in respective outer regions, particularly including the outer edges of the image, surrounding respective inner image regions. As indicated above, a respective image can be a gray or a white image, for example.

Particularly, the inhomogeneous intensity distribution of the light of the second wavelength can be set according to the intensity distribution of the light of the first wavelength. As an example, the light of the first wavelength can enter the working volume as a light sheet from one side (entrance side), leading to a higher intensity at the side where the light sheet enters the working volume, and a lower intensity at the side (exit side) where the light sheet exits the working volume. Here, pixels of a projection or projected image of the light of the second wavelength can have a higher intensity in regions of the formation zone closer to the exit side of the light sheet and pixels of the light of the second wavelength can have a lower intensity in regions of the formation zone closer to the entrance side of the light sheet. As another example, the light of the first wavelength can enter the working volume as a respective light sheets from different sides of the container, particularly opposite sides of the container, which will result in a lower intensity of the light of the first wavelength towards the middle of the working volume and a higher intensity of the light of the first wavelength close to the edges of the working volume, particularly where the light sheets enter and exit the working volume. In such an example it can be advantageous that pixels of a projection or projected image of the light of the second wavelength have a higher intensity in regions of the formation zone in the center between the exit and the entrance side of the light sheet and that pixels of the light of the second wavelength have a lower intensity in regions of the formation zone closer to the entrance and exit side of the light sheet. In other words, the intensity of the pixels of the light of the second wavelength can be higher in regions of the formation zone, where the intensity of the light of the first wavelength is lower and as such lead to a more homogenous curing or degree of polymerization of the photocurable resin. Particularly, the intensity variation of the light of the second wavelength can follow at least one gradient from white to gray or black pixels from outer regions to inner regions of the working volume and vice versa.

Particularly, pixels of a projection or projected image of the light of the second wavelength can have different intensities along the height direction of a light sheet of the light of the first wavelength. Particularly, pixels of a projection or projected image of the light of the second wavelength can have a lower intensity in regions of the formation zone around the center of the light sheet with respect to the height direction of the light sheet and a respectively higher intensity in regions of the formation zone at the top and bottom of the projected image with respect to the height direction of the light sheet. As such, inhomogeneities of the light intensity of the light of the first wavelength along the height direction of the light sheet can be compensated, by overlapping pixels of a projection or projected image of the light of the second wavelength having a higher intensity with regions of the light sheet of lower intensity, particularly along the height direction, in the formation zone and vice versa.

Without being bound by any theory, it has been surprisingly observed that a light sheet can suffer from an inhomogeneous intensity distribution along its height direction, which leads to inhomogeneous curing of the photocurable resin. Specifically, the light intensity of a respective light sheet along the height direction can depend on the light sheet generation. As an example, the light intensity of a respective light sheet can follow e.g. a Gaussian distribution or Cauchy distribution or parabolic distribution, which provides a higher intensity in the center of the light sheet relative to outer portions, such as edges, of the light sheet or which provides a higher intensity at the outer portions of the light sheet with respect to the center. Such an inhomogeneous intensity distribution of a respective light sheet with a higher intensity in the center can cause a higher degree of polymerization of the photocurable resin in the center of the light sheet, e.g. with respect to its height direction. Providing pixels of the light of the second wavelength with different intensities along the height direction of the light sheet, particularly with an intensity distribution with is inverted with respect to the intensity distribution of the light sheet along the height direction, can compensate for such an inhomogeneous intensity distribution of a light sheet. In other words, the intensity of pixels of the light of the second wavelength can be higher in regions of the formation zone, where the intensity of the light of the first wavelength is lower and thus, lead to a more homogenous curing or degree of polymerization of the photocurable resin. Particularly, the intensity variation of the light of the second wavelength can follow at least one gradient from white to gray or black pixels from outer regions to inner regions of the working volume and vice versa.

The intensity variation of the light of the second wavelength can be effected by processing, particularly software-based processing, of one or more images of the light of the second wavelength. A respective processing can comprise an application or implementation of at least one filter to respective images of the light of the second wavelength which results in an inhomogeneous intensity distribution of the light of the second wavelength between respective outer and inner regions of a respective image. Additionally or alternatively, the implementation of optical filter elements are conceivable. Respective optical filter elements can be or comprise so-called neutral density filter elements such as e.g. available from Thorlabs (see e.g. URL https://www.thorlabs.com/thorproduct.cfm?partnumber=NDL-25C-2).

A respective inhomogeneous intensity distribution of the light of the second wavelength can comprise an intensity distribution profile which comprises one or more portions, which can comprise pixels, having a higher intensity at inner image regions and one or more portions, which can comprise pixels, having a lower intensity at outer image regions.

As an example, a respective intensity distribution profile can thus, comprise one or more first portions or first pixels, respectively provided at a first edge, e.g. a first lateral edge, of the image having a first intensity, one or more second portions or second pixels, respectively provided at a center of the image having a second intensity higher than the first intensity, and one or more third portions or third pixels, respectively provided at a second edge, e.g. a second lateral edge, of the image, particularly a second edge opposite the first edge, having a third intensity lower than the second intensity. Notably, the third intensity can be similar or equal to the first intensity.

As an example, a respective intensity distribution profile can thus, comprise one or more first portions or first pixels, respectively provided at a first edge, i.e. a top or bottom edge with respect to the height direction of the light sheet, of the image having a first intensity, one or more second portions or second pixels, respectively provided at a center of the image having a second intensity higher than the first intensity, and one or more third portions or third pixels, respectively provided at a second edge, i.e. a bottom or top edge, of the image, particularly a second edge opposite the first edge, having a third intensity lower than the second intensity. Notably, the third intensity can be similar or equal to the first intensity.

A respective intensity distribution profile can be based on or comprise a predefined intensity distribution. A respective predefined intensity distribution can be or comprise a linear or non-linear distribution, for example. A respective predefined distribution can be expressed by mathematical function. As such, a respective predefined distribution can be or comprise a Gaussian distribution, a Cauchy distribution, an exponential distribution (based on an exponential function), polynomial distribution (based on a polynomial function), a parabolic distribution, a hyperbolic distribution (based on a hyperbolic function), for example.

The selection of a concrete intensity distribution profile can be based on simulations, modelling, or experimental results, which describe the intensity distribution of a light sheet extending through the working volume, for instance.

Alternatively or additionally to the intensity variation of the light of the second wavelength within a respective image of the light of the second wavelength, the intensity of the light of the second wavelength can also be varied in the formation direction such that a first image of the light of the second wavelength can comprise or be provided with a first intensity distribution and at least one further image of the light of the second wavelength which is projected after the first image can comprise or be provided with a second intensity distribution. As such, one or more pixels of a second image can have a different light intensity relative to one or more pixels of a preceding first image, wherein the respective pixels have the same position in the respective image. In such a manner, also the proximity effect which may result in overcuring and undesired deformation of at least some portions of the three-dimensional object to be printed can be reduced. Further, experiments have surprisingly shown that the outer edges of the three-dimensional object can be printed with higher fidelity when varying the intensity of the light of the second wavelength in the formation direction.

According to another exemplary embodiment, spatially and/or temporarily varying the at least one printing parameter, particularly a printing parameter influencing the curing behavior of the photocurable resin can comprise an inhomogeneous intensity distribution of the light of the second wavelength, particularly in a direction orthogonal to the formation direction. Particularly, a pixel of a projection or projected image of the light of the second wavelength can have a lower intensity when it is surrounded by pixels with high intensity and a higher intensity when it is surrounded by pixel with low intensity. Particularly, the intensity of an individual pixel can depend on the number and intensity of surrounding pixels, particularly neighboring pixels and the intensity value of each surrounding pixel, particularly each neighboring pixel. Particularly, the intensity of a pixel can depend on the sum of the intensity of the surrounding pixels, more particularly, the intensity of a pixel can depend on the factor of intensity and distance of the respective pixel and the individual pixel for each surrounding pixel. More particularly, the intensity of a pixel can depend on whether the object is supposed to be cured in the respective location, e.g. pixels in locations which are not supposed to be polymerized can be treated different from pixels in locations which are supposed to be polymerized. As an example, a pixel which is surrounded by pixels of higher intensity can have a lower intensity and a pixel in a location which is supposed to be polymerized which is surrounded by pixels of low or no intensity can have a higher intensity. Without being bound by any theory, adjusting the intensity of individual pixels to the intensity of pixels in close proximity can reduce unwanted overcuring caused by the proximity effect. As another example, the intensity of a pixel can also depend on the intensity of pixels in preceding or following images in the image sequence which is used during the printing process. The same processes regarding intensity variation of an individual pixel can apply to surrounding pixels in preceding and following images, e.g. the intensity of the individual pixel can depend on the intensity and distance of pixels across at least two images. Here an image has a thickness corresponding to a slice thickness obtained during the image creation.

According to another exemplary embodiment, the photocurable resin can comprise a chemical composition or chemical formulation, respectively which shows a strong gray-scale response. As such, the photocurable resin can show a reduced curing or no curing at low intensities of the light of the second wavelength. Low intensities can relate to intensities which are below a material-specific threshold value, for example. Using such a photocurable resin, whose reactivity properties can be influenced e.g. by the incorporation of inhibitors or less reactive photoinitiators or co-initiators, respectively, can improve the above-mentioned effects related with gray-scaling. Using such a photocurable resin is a unique approach which a person of ordinary skill in the art would not pursue as one typically, aims at using photocurable resins having a high reactivity already at low intensities of the light of the second wavelength.

Additionally or alternatively, a respective photocurable resin can comprise components which exhibit a comparatively low heat of polymerization. In such a manner, the thermal expansion of the photocurable resin as it cures can be reduced which can also positively influence the structural fidelity of a three-dimensional object. As an illustrative example, a flat plate with the dimensions 16 mm x 8 mm x 2 mm (height x width x length) can be printed in an apparatus as described in WO2021089090A1 from a conventional photocurable resin, which comprises a dual color photoinitiator (e.g. as described in WO2020245456A1, compound 2) 0.05 w%, Genomer 4247 (urethane dimethacrylate by Rahn) 64.95 w%, SR833S (by Sartomer Arkema) 30 w% and N-Methyldiethanolamine 5 w%. After post-processing of a three-dimensional object obtained from printing such a material, a curved plate is obtained, which can be characterized by a certain radius of curvature. When the components of the photocurable resin are altered to include a dual color photoinitiator (e.g. as described in WO2020245456A1, compound 2) 0.05 w%, Genomer 4247 64.95 w%, SR834 (by Sartomer Arkema) 30 w% and N-Methyldiethanolamine 5 w%, the plate which is obtained after post-processing shows a considerably larger radius of curvature, which shows less deformation due to the usage of SR834 in comparison to SR833S. The photocurable resin containing SR834 thus, has a lower heat of polymerization, which can be measured by photo differential scanning calorimetry, for example. While SR833S and SR834 have the same back bone, SR843 is a methacrylate and SR 833S is an acrylate. As such, using methacrylates which typically have a lower heat of polymerization compared to acrylates, is beneficial with respect to the structural fidelity of the three-dimensional objects obtained therefrom. Thus, this example provides evidence for an increased shape fidelity, when the heat of polymerization is reduced by using components with a lower heat of polymerization.

According to another exemplary embodiment, the formation time of the three-dimensional object can be at most 1 min per 1 mm extension of the three-dimensional object in the at least one direction. As such, the method can be implemented with high printing speeds which is another exemplary printing parameter which can influence the curing behavior of the photocurable resin.

According to another exemplary embodiment, the method can comprise printing at least one three-dimensional object with at least one hollow internal volume, such as e.g. a closed hollow internal volume, which includes uncured photocurable resin. As such, a three-dimensional object printed in accordance with the method can comprise at least one hollow internal volume, such as e.g. a closed hollow internal volume, which includes uncured photocurable resin. It has been surprisingly observed that deformation of an object can be reduced when the object comprises at least one hollow internal volume relative to a printing process in which a bulk three-dimensional object (of the same shape and size) is printed as the amount of photocurable resin which is to be cured to form the green state of the three-dimensional object can be reduced. The uncured photocurable resin included in a respective hollow internal volume can be cured in a post-processing step, for example. The at least one hollow internal volume can comprise a grid structure, such as e.g. a gyroid structure or any other infill-structure , which can stabilize the as formed three-dimensional object and a green body of the three-dimensional object, respectively. As such, the as formed three-dimensional object and a green body of the three-dimensional object, respectively can be handled, e.g. to a post-processing station.

Notably, this exemplary embodiment can relate to an independent aspect of the invention and is thus, not necessarily related to any other aspects or embodiments of the invention. As such, the disclosure herein also relates to a method for volumetric printing a three-dimensional object by multi-color photopolymerization of a photocurable resin, which comprises an irradiation process of irradiating, on basis of a plurality of printing parameters, a photocurable resin with light of a first wavelength and light of a second wavelength, different from the first wavelength, to form, by multi-color photopolymerization, a three-dimensional object in at least one direction, wherein the light of the first wavelength and the light of the second wavelength intersect in a formation zone, wherein the three-dimensional object comprises at least one hollow internal volume, such as e.g. a closed hollow internal volume, which includes uncured photocurable resin.

Another exemplary embodiment or even another independent aspect of the invention can comprise that the spatial and/or temporal variation of at least one printing parameter enables that each volume element of the photocurable resin can be irradiated with an individual second wavelength. As an example, a first pixel of a projected image of the light of the second wavelength can be irradiated with a first specific wavelength, such as e.g. green light, and a second pixel of the or another projected image of the light of the second wavelength can be irradiated with a second specific wavelength, such as e.g. red light, wherein both specific wavelengths can have (substantially) the same physical intensity. The individual specific first and specific second wavelength, which both represent a second wavelength, can e.g. be chosen according to the absorption spectra of the photocurable resin and a photoinitiator, particularly of the intermediate state of the photoinitiator, of the photocurable resin, respectively. Particularly, a second wavelength with a large overlapping area with the absorption spectrum of the intermediate state of the photoinitiator can result in a higher degree of curing compared to a second wavelength which has only little or no overlap with the absorption spectrum of the intermediate state.

Generally, the expression "white" or "high intensity" can refer to a second wavelength where the intermediate state of the photoinitiator of the photocurable resin has a high extinction coefficient, particularly the absorption maximum, and as such absorbs more of the light of the second wavelength.

"Black" or "low intensity" can refer to a second wavelength where the intermediate state of the photoinitiator has a lower extinction coefficient, particularly 0, and as such absorbs less of the light of the second wavelength or no light of the second wavelength. "Gray" can refer to a second wavelength where the extinction coefficient the intermediate state of the photoinitiator of the photocurable resin is between "white" and "black" or "gray" can refer to second wavelength which comprises a mixture of "white" and "black". As such an intensity variation with respect to the process can be accomplished by alternating the second wavelength, although the physical light intensity may be substantially the same. An intensity distribution can thus, refer to pixels having light of a different color all having substantially the same physical intensity.

Particularly, the inhomogeneous intensity distribution of the light of the second wavelength can be set according to the distribution of the photoinitiator of the photocurable resin in the intermediate state, which results, as explained above, from the irradiation of the photocurable resin with the light of the first wavelength. More particularly, the intermediate state of the photoinitiator of the photocurable resin can show fluorescence upon irradiation with the light of the first wavelength, which can be recorded by a camera, particularly a camera taking an image of the working volume from a position orthogonal to the light sheet. The obtained brightness of the individual pixels of the fluorescence image can correspond to the concentration of the photoinitiator molecules in the intermediate state. As an example, the fluorescence image can be converted into a gray scale image, followed by inverting black and white values of all pixels. The resulting image represents an improved intensity distribution which can be used for adjusting the intensity of the projected images of the light of the second wavelength during the printing process. The gray value of each pixel of the resulting image can be used to calculate a gray value for each pixel of the images which are projected during the printing process. Particularly, the gray value from the resulting image can be multiplied with a factor, which is constant for all pixels of at least one image.

The intensity variation of the light of the second wavelength can be effected by processing, particularly software-based processing, of one or more images of the light of the second wavelength. A respective processing can comprise an application or implementation of at least one gray scaling profile according to at least one of the described embodiments to respective images of the light of the second wavelength which results in an inhomogeneous intensity distribution of the light of the second wavelength. A respective processing can particularly, comprise combining two or more different gray scaling profiles.

The method can be implemented with at least one light modulation device assigned to the or an irradiation device, wherein the at least one light modulation device is configured to modulate the spatial extension direction of two or more light beams of the multiple beams of the light of the first wavelength in the at least one light plane such that the two or more light beams extend in a non-parallel arrangement relative to each other, and/or to generate at least two light beams of the first wavelength which have different polarizations or polarization states in at least one point within the working volume, and/or to generate at least two light beams which have different wavelengths, particularly within a specific wavelength range, in at least one point within the working volume. The at least one light modulation device can thus, be configured to generate at least two light beams of the first wavelength which have different polarizations or polarization states in at least one point within the working volume, and/or to generate at least two light beams which have different wavelengths, particularly within a specific wavelength range, in at least one point within the working volume. This can be a separate configuration of the at least one light modulation device, particularly independent from the configuration in which the at least one light modulation device is configured to modulate the spatial extension direction of two or more light beams of the multiple beams in the at least one light plane such that the two or more light beams extend in a non-parallel arrangement relative to each other.

Principles of angular diversity can comprise generating or using light beams of the first wavelength extending at an angle relative to each other such that they intersect in at least one point, e.g. an intersection point. Particularly, angular diversity can comprise generating or using light beams of the first wavelength extending at different angles relative to each other such that they intersect in at least two intersection points, more particularly generating many intersection points distributed over the light sheet. Particularly, principles of angular diversity can be implemented at an angle, particularly orthogonal, to the formation direction in which the object is to be printed, particularly to avoid or reduce a loss of resolution in the formation direction.

Specifically, the at least one light modulation device can be configured to affect, particularly to at least partly reduce, the optical coherence of light beams within the at least one light plane by deliberately changing the spatial extension direction and/or orientation of at least two light beams such that at least two light beams extend in a non-parallel arrangement relative to each other which results in that two or more light beams intersect at one or more intersection points within the at least one light sheet. Changing the spatial extension direction and/or orientation of at least two light beams such that at least two light beams extend in a nonparallel arrangement relative to each other within the at least one light plane also results in that the at least one light plane comprises light beams having angled spatial extension directions while traversing, travelling or propagating through the working volume. Specifically, at least two light beams can traverse, travel or propagate through the working volume at an angle different from 0° relative to each other. An intersection of at least two light beams at one or more intersection points within the at least one light plane can also comprise that at least two light beams can overlay at the one or more intersection points.

When one or more of the above principles, such as e.g. the principles of angular diversity, are applied to a light sheet of the light of the first wavelength, the determination of an ideal gray scaling for individual images can require high computational effort. Therefore, the application of simple gradients, gray filters obtained from measurements of the intermediate state distribution via fluorescence imaging, or the determination of gray scale values independent from the light of the first wavelength are preferred when the principles of angular diversity are applied to the light sheet.

The selection of a concrete intensity distribution profile for each projected image of the light of the second wavelength can be based on simulations, modelling, or experimental results, which describe the intensity distribution of a light sheet extending through the working volume or the absorption behavior or properties of each volume element or voxel in the working volume, which can be effected by switching the dual color photoinitiator from the initial state to the intermediate state and/or by bleaching of the intermediate state due to initiation and formation of absorbing side products, for instance. As such, the photophysical process, e.g. absorption, (photo)switching, and the physical parameters, e.g. light intensities, light sheet thickness, can be included in the modelling.

Further, experimental results can be used as data on printed objects, particularly structural data, and applied process parameters, particularly process parameters including gray scaling information, to train one or more algorithms or a software comprising the same. Respective algorithms can implement principles of artificial intelligence and machine learning, respectively which can be used to find improved process parameters, particularly process parameters comprising gray scaling information.

A further aspect of the invention relates to an apparatus for volumetric printing a three-dimensional object by multi-color photopolymerization of a photocurable resin, which comprises an irradiation device for performing an irradiation process of irradiating, on basis of a plurality of printing parameters, a photocurable resin with light of a first wavelength and light of a second wavelength, different from the first wavelength to form, by multi-color photopolymerization, a three-dimensional object in at least one direction, wherein the light of the first wavelength and the light of the second wavelength intersect in a formation zone. The apparatus comprises a hardware- and/or software-embodied controller configured to spatially and/or temporally vary at least one printing parameter, particularly a printing parameter influencing the curing (behavior) of the photocurable resin, during the irradiation process. The apparatus is thus, configured to implement the method of the first aspect of the invention such that all remarks made in connection with the method of the first aspect of the invention also apply to the apparatus of the further aspect of the invention, and vice versa.

The apparatus is thus, generally configured to form at least one three-dimensional object via volumetric printing based on multi-color photopolymerization, particularly dual-color polymerization, of a photocurable resin. A respective three-dimensional object can be a technical component or form part of a technical component, for instance. As an example, a technical component can be an optical component or form part of an optical component. As an example, a respective optical component can be a diffractive element, a transmissive element, or a lens element, for instance. The term "three-dimensional object" thus, particularly refers to a technical component which is generally ready to be used (except for possible post-processing steps).

The apparatus can be or comprise a volumetric 3d-printing apparatus, particularly a xolography apparatus, i. e. an apparatus configured to perform the base principles of xolography. The base principles of xolography are specified in WO 2020/245456 A1, the contents of which are incorporated herein by reference.

The apparatus typically comprises a container for receiving photocurable resin. The container can be moveably supported in at least one direction. The at least one direction can be or comprise the formation direction of a respective three-dimensional object to be printed.

The apparatus can further comprise a dual-color irradiation device configured to irradiate a photocurable resin inside the or a respective container. The dual-color irradiation device is configured to irradiate the photocurable resin with light of a first wavelength and, particularly simultaneously, with light of a second wavelength different form the first wavelength. The dual-color irradiation device can comprise at least one first irradiation apparatus comprising at least one first light source for generating the light of the first wavelength and at least one second irradiation apparatus comprising at least one second light source for generating the light of the second wavelength. The dual-color irradiation device can be configured to generate a light sheet from the light of the first wavelength, wherein the light sheet extends in a light sheet plane. Further, the dual-color irradiation device can be configured to generate a light projection of the light of the second wavelength, wherein the light projection intersects with the light sheet at an intersection angle, particularly an intersection angle of (ca.) 90°. A light projection of the light of the second wavelength can be generated with multiple light beams of the second wavelength which are emitted simultaneously or sequentially. As such, a light projection of the light of the second wavelength can comprise at least one of the following: an image of the light of the second wavelength which image can comprise image elements, such as e.g. pixels, of different intensities which results in an inhomogeneous or homogeneous intensity distribution of the image; or a sequential hatching of different locations, which can comprise e.g. points or lines, which result in an image of the light of the second wavelength which image can comprise image elements, such as e.g. pixels, of different intensities which results in an inhomogeneous or homogeneous intensity distribution of the image.

The at least one first irradiation apparatus can thus, comprise at least one light source configured to irradiate light of a first wavelength towards the photocurable resin to generate at least one first light projection forming a light sheet. A respective light sheet can comprise multiple light beams extending in a common plane. The at least one first irradiation apparatus can be built as or comprise a laser or light emitting diode, for instance. The at least one first irradiation apparatus can further comprise at least one optical element which can e.g. comprise at least one of: a Powell-lens, a cylindrical lens, a diffractive optical element, a beam expanding element, a collimating optical element, etc. Additionally or alternatively, the at least one first irradiation apparatus can comprise a light deflection unit, such as e.g. a (moveable or rotatable) mirror, a galvo-scanner, or a polygon scanner, for deflecting light towards the photocurable resin. The at least one first irradiation apparatus can be configured to vary the focus or at least one focus parameter, particularly at least one of: the focus position, the focal length, the depth of focus, or the depth of field, of at least one respective first light projection within the working volume. Particularly, the at least one first irradiation apparatus can be configured to vary the focus or at least one focus parameter with respect to the size of the formation zone. The at least one first irradiation apparatus can comprise one or more controllers configured to vary the focus or at least one focus parameter, particularly at least one of: the focus position, the focal length, the depth of focus, or the depth of field, of at least one respective first light projection within the working volume. Additionally or alternatively, the at least one first irradiation apparatus can comprise one or more optical elements, such as e.g. lenses, particularly adaptable or adjustable lenses, which are configured to vary the focus or at least one focus parameter, particularly at least one of: the focus position, the focal length, the depth of focus, or the depth of field, of at least one respective first light projection within the working volume. The light emitted or irradiated by the at least one first irradiation apparatus can comprise a wavelength in the range of: 350 nm - 500 nm, particularly 375 nm - 450 nm, more particularly 385 nm - 440 nm, more particularly 395 nm - 420, more particularly 400 nm - 410 nm, for instance. The light of the first wavelength can comprise a spectrum of wavelengths, particularly at least partly covering the respective ranges. As an example, the first wavelength can be ca. 375 nm. Typically, the first wavelength will be chosen at least under consideration of the photochemical properties, particularly the photochromic properties, of molecules of a photoinitiator of the photocurable resin.

The at least one second irradiation apparatus can thus, comprise at least one second light source configured to continuously project a projection of images corresponding to a cross-sectional geometry of a three-dimensional object to be printed or a plurality of points or lines corresponding to a cross-sectional geometry of a three-dimensional object to be printed. The second irradiation apparatus can be built as or comprise an image projection device, particularly a digital light projection device, or a directed light emission device, for instance. The at least one second irradiation apparatus can further comprise one or more light projection optics. The at least one second irradiation apparatus can be configured to change the size of at least one image of the projection of images or of at least one image element, such as e.g. a pixel, of at least one image of the projection of images. The at least one second irradiation apparatus can comprise one or more controllers configured to change the size of at least one image of the projection of images or of at least one image element, such as e.g. a pixel, of at least one image of the projection of images. Additionally or alternatively, the at least one second irradiation apparatus can comprise one or more optical elements, such as e.g. lenses, which are configured to change the size of at least one image of the projection of images or of at least one image element, such as e.g. a pixel, of at least one image of the projection of images. The light emitted or irradiated by the at least one second irradiation apparatus can comprise a wavelength in the range of: 400 nm - 1000 nm, particularly 425 - 750 nm, more particularly 450 - 675 nm, more particularly 500 - 650 nm, for instance. The light of the second wavelength can comprise a spectrum of wavelengths, particularly at least partly covering the respective ranges. Typically, the second wavelength will be chosen at least under consideration of the photochemical properties, particularly the photochromic properties, of molecules of a photoinitiator of the photocurable resin.

As indicated above, the dual-color irradiation device can be configured to generate a projection of images from the light of the second wavelength, wherein the light projection intersects with the light sheet at an intersection angle, particularly an intersection angle of (ca.) 90°. The dual-color irradiation device can thus, be generally configured to irradiate the light of the first wavelength at a first angle, particularly an angle of 0 - 180°, and the light of the second wavelength at a second angle, particularly an angle of 0 - 180°, relative to the main extension plane of the at least one formation zone. Respective angles can particularly, range between 15 and 165°, more particularly between 30 and 150°, more particularly between 90 and 150° or between 30 and 90°. Particularly, the light of the second wavelength can be irradiated with respect to the light of the first wavelength at an angle of 90°.

### Brief description of the drawings

With these and other advantages and features that will become hereinafter apparent, a more complete understanding of the invention can be obtained by referring to the following description of the appended drawings in which:
Fig. 1 shows a principle drawing of at least parts of an apparatus for printing a three-dimensional object according to an exemplary embodiment,
Fig. 2 - 6 each show a principle drawing of spatially and/or temporally varying one or more printing parameters in accordance with exemplary embodiments,
Fig. 7 and 8 each show principle drawings of a method according to other exemplary embodiments, and
Fig. 9 and 10 each show principle drawings of a method according to other exemplary embodiments.

### Detailed description of the drawings

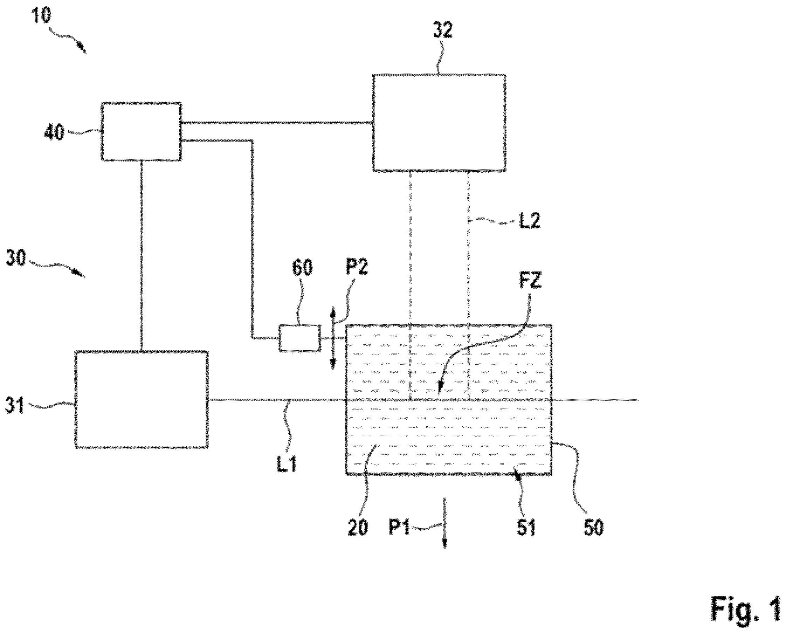

Fig. 1 shows a principle drawing of at least parts of an apparatus 10 for printing at least one three-dimensional object according to an exemplary embodiment in a schematic top-view.

The apparatus 10 is configured for volumetric printing at least one three-dimensional object by dual-color photopolymerization of a photocurable resin 20 and comprises an irradiation device 30 for performing an irradiation process of irradiating, on basis of a plurality of printing parameters, a photocurable resin 20 with light L1 of a first wavelength and light L2 of a second wavelength, different from the first wavelength to form, by dual-color photopolymerization, a three-dimensional object in at least one direction (indicated by arrow P1 in Fig. 1) which can be or comprise the formation direction of a three-dimensional object to be printed. As is apparent from Fig. 1, the light L1 of the first wavelength and the light L2 of the second wavelength intersect in a formation zone FZ.

The light L1 of the first wavelength can comprise a light sheet comprising a plurality of light beams extending through the photocurable resin 20. Respective light beams can comprise a light plane, for instance. A light plane can be or comprise a light plane in which the or a plurality of light beams, particularly (substantially) parallel light beams, extend adjacent such that there is no intermediate space between directly adjacent light beams. Notably, at least some of the directly adjacent light beams can also partially overlap. Alternatively, a light plane can be or comprise a light plane in which the or a plurality of light beams extend adjacent such that there is an intermediate space between directly adjacent light beams. Respective light beams can be generated by a directed light emission device, such as e.g. a laser device, which can form part of an irradiation device of a volumetric printing apparatus used for implementing the method, for instance.

The light L2 of the second wavelength can comprise a projection of images corresponding to a cross-sectional geometry of a three-dimensional object to be printed or a plurality of points or lines corresponding to a cross-sectional geometry of a three-dimensional object to be printed. Respective points or lines can form a pattern, such as e.g. a hatch pattern. A respective projection can be generated by a light projection device, such as e.g. a digital light projection device, which can form part of an irradiation device of a volumetric printing apparatus used for implementing the method. A respective point or line can be generated by a directed light emission device, such as e.g. a laser device, which can form part of an irradiation device of a volumetric printing apparatus used for implementing the method, for instance. Both the light projection device and the directed light emission device can be examples of a second irradiation apparatus 32 as will be explained further below.

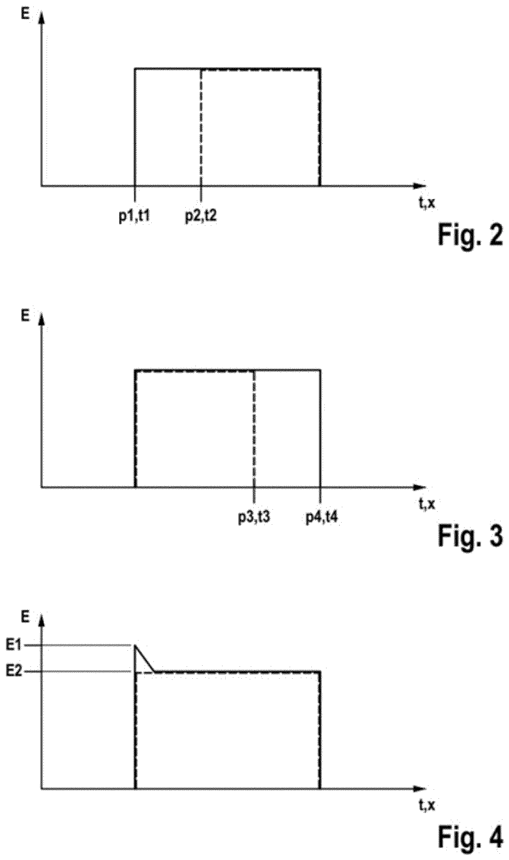

The apparatus 10 comprises a hardware- and/or software-embodied controller 40 configured to spatially and/or temporally vary at least one printing parameter, particularly a printing parameter influencing the curing (behavior) of the photocurable resin 20, during the irradiation process. The apparatus 10 is thus, configured to implement a method, exemplary embodiments of which will be explained in more detail in connection with Fig. 2 - 6.

The apparatus 10 can be or comprise a volumetric 3d-printing apparatus, particularly a xolography apparatus, i. e. an apparatus configured to perform the base principles of xolography. The base principles of xolography are specified in WO 2020/245456 A1, the contents of which are incorporated herein by reference.

The apparatus 10 comprises a container 50 for receiving photocurable resin 20. The container 50 delimits a container volume 51 which can comprise a working volume in which a three-dimensional object can be printed. One or more walls of the container 50 can be made of a material which enables irradiating the photocurable resin inside the container with the light L1, L2 of the first and the second wavelength. A respective material can be a transparent material, for instance. A respective transparent material can be glass or a polymer, such as e.g. polycarbonate, polymethylmethacrylate, or cyclic olefin copolymer, for instance.

The container 50 can be moveably supported in at least one direction (indicated by double-arrow P2 in Fig. 1) e.g. via an associated drive device 60, e.g. an electric motor. As is apparent from Fig. 1, the at least one direction can be or comprise the formation direction of a respective three-dimensional object to be printed. Notably, the drive device 60 could also be associated with a first irradiation apparatus 31 of an irradiation device 30 of the apparatus 10 to move the first irradiation apparatus 31 in analogous manner in at least one direction.

The apparatus 10 further comprises a dual-color irradiation device 30 which is configured to irradiate the photocurable resin inside the container 50 with the light L1, L2 of the first and second wavelength. Particularly, the dual-color irradiation device 30 is configured to simultaneously irradiate the photocurable resin 20 with the light L1, L2 of the first and second wavelength. The dual-color irradiation device 30 can be configured to generate a light sheet from the light L1 of the first wavelength, wherein the light sheet extends in a light sheet plane. Further, the dual-color irradiation device 30 can be configured to generate e.g. a light projection from the light L2 of the second wavelength, wherein the light projection intersects with the light sheet at an intersection angle, particularly an intersection angle of (ca.) 90°.

As is apparent from Fig. 1, the dual-color irradiation device 30 can comprise a first irradiation apparatus 31 comprising at least one first light source for generating and emitting the light L1 of the first wavelength and a second irradiation apparatus 32 comprising at least one second light source for generating and emitting the light L2 of the second wavelength.

The first irradiation apparatus 31 can comprise at least one light source configured to irradiate light L1 of the first wavelength towards the photocurable resin 20 to generate a light sheet. The first irradiation apparatus 31 can be built as or comprise a laser or light emitting diode, for instance. The first irradiation apparatus 31 can further comprise at least one optical element which can e.g. comprise at least one of: a Powell-lens, a cylindrical lens, a diffractive optical element, a beam expanding element, a collimating optical element, etc. Additionally or alternatively, the first irradiation apparatus 31 can comprise a light deflection unit, such as e.g. a (moveable, particularly rotatable) mirror, a galvo-scanner, or a polygon scanner, for deflecting light towards the photocurable resin 20. The first irradiation apparatus 31 can be configured to vary the focus or focus parameter, particularly at least one of: the focus position, the focal length, the depth of focus, or the depth of field, of at least one respective first light projection within the working volume. Particularly, the first irradiation apparatus 31 can be configured to vary the focus or at least one focus parameter with respect to the size of the formation zone. The first irradiation apparatus 31 can comprise one or more controllers configured to vary the focus or a focus parameter, particularly at least one of: the focus position, the focal length, the depth of focus, or the depth of field, of at least one respective first light projection within the working volume. Additionally or alternatively, the first irradiation apparatus 31 can comprise one or more optical elements, such as e.g. lenses, particularly adaptable or adjustable lenses, which are configured to vary the focus or a focus parameter, particularly at least one of: the focus position, the focal length, the depth of focus, or the depth of field, of at least one respective first light projection within the working volume. The light L1 emitted or irradiated by the first irradiation apparatus 31 can comprise a wavelength in the range of: 350 nm - 500 nm, particularly 375 nm - 450 nm, more particularly 385 nm - 440 nm, more particularly 395 nm - 420, more particularly 400 nm - 410 nm, for instance. The light L1 of the first wavelength can comprise a spectrum of wavelengths, particularly at least partly covering the respective ranges. As an example, the first wavelength can be ca. 375 nm. Typically, the first wavelength will be chosen at least under consideration of the photochemical properties, particularly the photochromic properties, of molecules of a photoinitiator of the photocurable resin 20.

The second irradiation apparatus 32 can comprise at least one second light source configured to continuously emit images of light L2 of the second wavelength towards the photocurable 20 resin, wherein each image can correspond to a specific cross-section of a three-dimensional object to be printed, or a plurality of points or lines corresponding to a cross-sectional geometry of a three-dimensional object to be printed. The second irradiation apparatus 32 can be built as or comprise an image projection device, particularly a digital light projection device, or a directed light emission device, for instance. The second irradiation apparatus 32 can further comprise one or more light projection optics. The second irradiation apparatus 32 can thus, generate image elements, such as e.g. voxels, having a specific focus and/or size, for instance. The second irradiation apparatus 32 can be configured to change the size of at least one image of the projection of images or of at least one image element, such as e.g. a pixel, of at least one image of the projection of images. The second irradiation apparatus 32 can comprise one or more controllers configured to change the size of at least one image of the projection of images or of at least one image element, such as e.g. a pixel, of at least one image of the projection of images. Additionally or alternatively, the second irradiation apparatus 32 can comprise one or more optical elements, such as e.g. lenses, which are configured to change the size of at least one image of the projection of images or of at least one image element, such as e.g. a pixel, of at least one image of the projection of images. The light L2 emitted or irradiated by the second irradiation apparatus 32 can comprise a wavelength in the range of: 400 nm - 1000 nm, particularly 425 - 750 nm, more particularly 450 - 675 nm, more particularly 500 - 650 nm, for instance. The light L2 of the second wavelength can comprise a spectrum of wavelengths, particularly at least partly covering the respective ranges. Typically, the second wavelength will be chosen at least under consideration of the photochemical properties, particularly the photochromic properties, of molecules of a photoinitiator of the photocurable resin 20.

As indicated above, the dual-color irradiation device 30 can thus, be generally configured to irradiate the light L1 of the first wavelength at a first angle, particularly an angle of 0 - 180°, and the light L2 of the second wavelength at a second angle, particularly an angle of 0 - 180°, relative to the extension direction of the light L1 of the first wavelength. Respective angles can particularly, range between 15 and 165°, more particularly between 30 and 150°, more particularly between 90 and 150° or between 30 and 90°. Particularly, the light L2 of the second wavelength can intersect the light L1 of the first wavelength at an angle of 90° (as is exemplarily shown in Fig. 1).

The apparatus 10 is configured for implementing a method for volumetric printing a three-dimensional object by multi-color photopolymerization, particularly by dual-color photopolymerization, of a photocurable resin, examples of which will be further explained below in connection with Fig. 2 - 6.

The method generally comprises an irradiation process of irradiating, on basis of a plurality of printing parameters, a photocurable resin with light L1 of a first wavelength and light L2 of a second wavelength, which is different from the first wavelength, to form, by multi-color photopolymerization, particularly by dual-color photopolymerization, a three-dimensional object in at least one direction. The method thus, comprises a process of irradiating a photocurable resin with light L1 of a first wavelength and light L2 of a second wavelength, which is different from the first wavelength, to form, by multi-color photopolymerization, particularly by dual-color photopolymerization, a three-dimensional object in at least one direction, wherein irradiating the photocurable resin with the light L1, L2 of the first wavelength and the second wavelength is based on one or more printing parameters. The at least one direction can be or comprise the formation direction of the respective three-dimensional object to be printed.

As indicated above, the light L1 of the first wavelength can comprise a wavelength in the range of: 350 nm - 500 nm, particularly 375 nm - 450 nm, more particularly 385 nm - 440 nm, more particularly 395 nm - 420, more particularly 400 nm - 410 nm, for instance. The light L1 of the first wavelength can comprise a spectrum of wavelengths, particularly at least partly covering the respective ranges. As a concrete example, the first wavelength can be ca. 375 nm.

As indicated above, the light L2 of the second wavelength can comprise a wavelength in the range of: 400 nm - 1000 nm, particularly 425 - 750 nm, more particularly 450 - 675 nm, more particularly 500 - 650 nm, for instance. The light L2 of the second wavelength can comprise a spectrum of wavelengths, particularly at least partly covering the respective ranges. As an example, the second wavelength can be ca. 475 nm.

As indicated above, the photocurable resin 20 is irradiated with the light of the first wavelength and the light of the second wavelength such that the light L1 of the first wavelength and the light L2 of the second wavelength intersect in a formation zone FZ. The light L1 of the first wavelength can be irradiated into the photocurable resin 20 at a different angle relative to the light L2 of the second wavelength. As an example, the light L1 of the first wavelength can be irradiated into the photocurable resin at an angle of ca. 90° relative to the light L2 of the second wavelength. The formation zone FT is the zone in which the photopolymerization of the photocurable resin 20 takes place which results in photocuring of the photocurable resin 20 and forming at least a cross-section of the three-dimensional object to be printed.

Respective printing parameters can generally be or comprise parameters of the irradiation process which influence the spatial and/or temporal irradiation of the photocurable resin 20 with the light L1, L2 of the first and the second wavelength. Respective printing parameters can additionally or alternatively be or comprise the number of irradiation steps in which one or more volume elements, e.g. voxels, of the photocurable resin 20 are irradiated with the light L1 of the first wavelength and/or with the light L2 of the second wavelength. As such, respective printing parameters can be or comprise control parameters of the apparatus 10 of Fig. 1 which concern the spatial and/or temporal irradiation of the photocurable resin 20 with the light L1, L2 of the first and the second wavelength to form, by multi-color photopolymerization, particularly by dual-color photopolymerization, a three-dimensional object in at least one direction. Respective printing parameters can be or comprise control parameters of the irradiation device 30 of the apparatus of Fig. 1. Respective printing parameters can also be or comprise control parameters of the drive device 60 of the apparatus 10 of Fig. 1.

The method comprises spatially and/or temporally varying at least one printing parameter, particularly at least one printing parameter influencing the curing or the curing behavior of the photocurable resin 20, during the irradiation process. The irradiation process of the method thus, comprises a concerted and deliberate spatial and/or temporal control of the irradiation process which comprises a concerted and deliberate variation of at least one printing parameter, particularly of at least one printing parameter influencing the curing behavior of the photocurable resin 20, during the irradiation process. A respective spatial and/or temporal variation of at least one printing parameter can also concern the number of irradiation steps in which one or more volume elements, e.g. voxels, of the photocurable resin 20 are irradiated with the light L1 of the first wavelength and/or the light L2 of the second wavelength. As such, a respective spatial and/or temporal variation of at least one printing parameter can also comprise a variation of the number of irradiation steps in which one or more volume elements, e.g. voxels, of the photocurable resin 20 are irradiated with the light L1 of the first wavelength and/or the light L2 of the second wavelength. A respective spatial and/or temporal variation of at least one printing parameter can also comprise a variation of the focus of the light L1 of the first wavelength and/or size of one or more images or one or more image elements, such as e.g. pixels, of the light L2 of the second wavelength. A respective spatial and/or temporal variation of at least one printing parameter can also concern the motion direction and/or motion rate of the photocurable resin 20, particularly relative to a light sheet formed by the light L1 of the first wavelength. As such, a respective spatial and/or temporal variation of at least one printing parameter can also comprise a variation of the motion direction and/or motion rate of the photocurable resin 20, particularly relative to a light sheet formed of the light L1 of the first wavelength.

Based on the spatial and/or temporal variation of at least one printing parameter, the irradiation process can thus, comprise that at least one first portion of the three-dimensional object or volume element to be printed (first object portion) is printed with at least one different printing parameter relative to at least one further portion of the three-dimensional object or volume element to be printed (further object portion). A respective first object portion can comprise one or more first volume elements, e.g. voxels, of the photocurable resin 20 which are located at one or more first positions within the photocurable resin 20. A respective further object portion can comprise one or more further volume elements, e.g. voxels, of the photocurable resin 20 which are located at one or more further positions within the photocurable resin 20. Respective further volume elements can be volume elements which are located behind respective first volume elements in the formation direction as indicated by arrow P1 in Fig. 1. Respective further volume elements can also be volume elements which are located adjacent to the three-dimensional object to be printed, such as e.g. volume elements which do not form part of the three-dimensional object to be printed. Particularly, respective further volume elements can also be volume elements which do not form part of the three-dimensional object to be printed as they are located in front of or behind the three-dimensional object to be printed with respect to the formation direction.

Generally, the spatial and/or temporal variation of at least one printing parameter enables that each volume element of the photocurable resin 20 can be irradiated with individual printing parameters, particularly printing parameters which influence e.g. the amount of energy, energy density, energy intensity, etc. the respective volume element is exposed to during the irradiation process.

The printing parameters for a respective volume element of the photocurable resin 20 can be chosen under consideration of the position of the respective volume element within the photocurable resin and within the three-dimensional object to be printed, respectively. As an example, one or more volume elements of the photocurable resin 20 which are located adjacent or in proximity to uncured or not to be cured photocurable resin 20 can be irradiated with different printing parameters than one or more volume elements of the photocurable resin 20 which are adjacent or in proximity to cured or to be cured photocurable resin 20. In such a manner, the spatial and/or temporal variation of at least one printing parameter can particularly be implemented to consider the so-called proximity-effect which causes that a volume element in proximity to another volume element which has already been cured exhibits a specific curing behavior, e.g. an easier or faster curing, which is different from the curing behavior of a volume element which is not in proximity to another volume element which has already been cured or photopolymerized, respectively. Notably, the proximity-effect oftentimes causes undesired structural anisotropy and related undesired lower shrinkage and deformation, respectively of three-dimensional objects in conventional volumetric printing methods.

As such, the method enables, based on the spatial and/or temporal variation of at least one printing parameter during the irradiation process, printing three-dimensional objects with higher structural isotropy and lower undesired shrinkage and deformation, respectively such that the resulting three-dimensional objects show higher geometrical accuracy and structural fidelity, respectively.

Irradiating the photocurable resin 20 with the light L1 of the first wavelength causes one or more photoinitiator molecules of the photocurable resin 20 to transfer from an initial state into an intermediate state with changed optical properties compared to the initial state, such that the molecules of the one or more photoinitiators in the intermediate state can absorb the light L2 of the second wavelength which results in that the molecules of the one or more photoinitiators are transferred from the intermediate state to a reactive state by absorption of light L2 of the second wavelength which locally triggers the polymerization of the photocurable resin 20 to form at least one three-dimensional object.

The photocurable resin 20 can be a photocurable monomer resin or a photocurable oligomer resin, which may include acrylates, methacrylates, thiol + ene, epoxides, oxiranes, oxetanes, or vinylethers, for instance. Multi-color photopolymerization can comprise multi-photon photopolymerization, particularly dual-photon photopolymerization, of the photocurable resin 20. Photopolymerization of the photocurable resin 20 is thus, effected by irradiating the photocurable resin 20 with the light L1 of the first wavelength and, particularly simultaneously, the light L2 of the second wavelength which results in that molecules of the one or more photoinitiators of the photocurable resin 20 are converted, e.g., due to the absorption of the light L1 of the first wavelength, from an initial state in which the molecules of the one or more photoinitiators (substantially) do not absorb the light L2 of the second wavelength, into an intermediate state with changed optical properties compared to the initial state, such that the molecules of the one or more photoinitiators in the intermediate state absorb the light L2 of the second wavelength which results in that the molecules of the one or more photoinitiators are transferred from the intermediate state to a reactive state which locally triggers the polymerization of the photocurable resin 20 to form at least one three-dimensional object.

Suitable photoinitiators of a respective photocurable resin 20 are e.g. known from US5230986A, WO2020245456A1, WO2023034398A1, WO2023034402A1, WO2023220461A1, WO2023220463A1, the contents of which are incorporated herein by reference.

As indicated above, the at least one formation zone FZ can be moved along the at least one direction, particularly relative to a respective container 50 comprising the photocurable resin 20, at a nominal motion rate. The at least one direction can comprise the or a formation direction of the three-dimensional object to be printed. Motion of the at least one formation zone FZ can e.g. be relative to at least one functional component of the apparatus 10 used for implementing the method. A respective functional component of the apparatus 10 can be a respective container 50 or an irradiation device 30, for instance. As such, during the irradiation process, the at least one formation zone FZ can be actively moved along the at least one direction, particularly the formation direction, at a nominal motion rate through at least one part of the container volume 51, while the container 50 is stationary. Alternatively, during the irradiation process, at least one part of the container volume 51 can be actively moved along the at least one direction, particularly the formation direction, while the at least one formation zone FZ is stationary. Further alternatively, both the at least one formation zone FZ and at least one part of the container 50 can be actively moved, wherein the at least one formation zone FZ and the at least one part of the container 50 can be moved in the same direction or in opposite directions. Also the nominal motion rate at which the at least one formation zone FZ and/or the container 50 is moved along the at least one direction, particularly relative to the container 50, can be an example of a printing parameter because the nominal motion rate and particularly, spatial and/or temporal variations of the nominal motion rate can also influence the curing behavior of the photocurable resin. Additionally or alternatively, it is also possible that the or a second irradiation apparatus 32 of the dual-color irradiation device 30 can be actively moved along the at least one direction, particularly the formation direction, while at least one of the container 50 or the at least one formation zone FZ is actively moved. Moving the second irradiation apparatus 32 of the dual-color irradiation device 30 can be a means to implement a focus correction of the light L2 of the second wavelength in the at least one formation zone. As such, also embodiments are contemplated in which each of the first irradiation apparatus 31 of the dual-color irradiation device 30 or the at least one formation zone FZ, respectively, the second irradiation apparatus 32 of the dual-color irradiation device 30, and the container 50 are actively moved before, during or after the at least one irradiation process. Respective motions can be controlled by controller 40.

Fig. 2 is a diagram in which the vertical axis represents the energy level of the light L1 of the first wavelength (non-dotted line) and the energy level of the light L2 of the second wavelength (dotted line) and the horizontal axis represents a location x within the container volume 51 or the photocurable resin 20 or the time t, respectively.

Fig. 2 specifically shows that spatially and/or temporally varying the at least one printing parameter, particularly a printing parameter influencing the curing (behavior) of the photocurable resin 20, can comprise that the photocurable resin 20 is irradiated with the light L1 of the first wavelength before it is irradiated with the light L2 of the second wavelength. Hence, the variation of at least one printing parameter can comprise that the photocurable resin 20 is spatially and/or temporally irradiated with the light L1 of the first wavelength before it is irradiated with the light L2 of the second wavelength. As such, one or more volume elements of the three-dimensional object to be printed can be irradiated with the light L1 of the first wavelength before these volume elements are irradiated with the light L2 of the second wavelength. Respective one or more volume elements of the photocurable resin 20 can particularly, comprise the first volume elements of the three-dimensional object to be printed. In other words, the irradiation process can comprise that one or more volume elements can be (only) irradiated with the light L1 of the first wavelength spatially and/or temporally before subsequent volume elements are irradiated with the light L2 of the second wavelength (and typically, also with the light L1 of the first wavelength). Irradiating volume elements of the photocurable resin 20 with the light L1 of the first wavelength only can result in a pre-activation of these volume elements which results in improved curing of the adjacent volume elements when they are subsequently irradiated with both the light L1, L2 of the first and the second wavelength and thus, result in improved structural properties of the respective three-dimensional object to be printed.

An example of irradiating the photocurable resin 20 with the light L1 of the first wavelength (spatially) before it is irradiated with the light L2 of the second wavelength which can be derived from Fig. 2 can comprise that irradiating the photocurable resin 20 with the light L1 of the first wavelength starts at a first position p1 and that irradiating the photocurable resin 20 with the light L2 of the second wavelength starts at a second position p2, wherein the second position p2 is located behind the first position p1 in the formation direction. The second position p2 is typically, a position within a volume of the photocurable resin 20 which forms the respective three-dimensional object to be printed and thus, a position inside the respective three-dimensional object 20 to be printed. Particularly, the second position p2 can be a position within a volume of the photocurable resin 20 which forms an outer boundary or edge of the respective three-dimensional object to be printed and thus, a position at a surface of the respective three-dimensional object to be printed. As such, the three-dimensional object to be printed can comprise portions which are located behind the second position p2 with respect to the formation direction or the three-dimensional object is formed behind the second position p2 with respect to the formation direction, respectively. Hence, the second position p2 can comprise the first volume element, such as e.g. the first voxel, of the three-dimensional object to be printed with respect to the formation direction. The first position p1 can also be a position within a volume of the photocurable resin 20 which forms the respective three-dimensional object to be printed and thus, a position inside the respective three-dimensional object to be printed. Yet, the first position p1 can also be a position within a volume of the photocurable resin 20 which does not form the respective three-dimensional object to be printed and thus, a position outside the respective three-dimensional object to be printed.

Another example of irradiating the photocurable resin with the light L1 of the first wavelength (temporally) before it is irradiated with the light of the second wavelength which can be derived from Fig. 2 can comprise that irradiating the photocurable resin 20 with the light L1 of the first wavelength starts at a first time t1 and that irradiating the photocurable resin 20 with the light L2 of the second wavelength starts at a second time t2, wherein t2 > t1. The second time t2 typically, corresponds to a time at which a volume of the photocurable resin 20 which forms the respective three-dimensional object to be printed is irradiated. Particularly, the second time t2 can correspond to a time at a volume of the photocurable resin 20 which forms an outer boundary or edge of the respective three-dimensional object to be printed and thus, a position at a surface of the respective three-dimensional object to be printed is irradiated. As such, the three-dimensional object to be printed can comprise portions which are to be printed after the second time t2 or the printing of the three-dimensional object is completed after the second time t2, respectively. Hence, the second time t2 can comprise a time at which the first volume element, such as e.g. the first voxel, of the three-dimensional object to be printed is printed with respect to the formation direction. The first time t1 can also correspond to a time at which a volume of the photocurable resin 20 which forms the respective three-dimensional object to be printed is irradiated. Yet, the first time t1 can also correspond to a time at which a volume of the photocurable resin 20 which does not form the respective three-dimensional object to be printed is irradiated.

Fig. 3 is another diagram in which the vertical axis represents the energy level of the light L1 of the first wavelength (non-dotted line) and the energy level of the light L2 of the second wavelength (dotted line) and the horizontal axis represents a location x within the container volume 51 or the photocurable resin 20 or the time t, respectively.

Fig. 3 specifically shows that spatially and/or temporally varying the at least one printing parameter, particularly a printing parameter influencing the curing (behavior) of the photocurable resin 20, can comprise that the photocurable resin 20 is irradiated with the light L1 of the first wavelength after it is irradiated with the light L2 of the second wavelength. Hence, the variation of at least one printing parameter can comprise that the photocurable resin 20 is spatially and/or temporally irradiated with the light L1 of the first wavelength after it is irradiated with the light L2 of the second wavelength. As such, one or more volume elements of the three-dimensional object to be printed can be irradiated with the light L1 of the first wavelength after the adjacent volume elements have been irradiated with the light L2 of the second wavelength. Respective one or more volume elements of the photocurable resin can particularly, comprise the last volume elements of the three-dimensional object to be printed. In other words, the irradiation process can comprise that one or more volume elements can be (only) irradiated with the light L1 of the first wavelength spatially and/or temporally after previous volume elements have been irradiated with the light L2 of the second wavelength (and typically, also the light L1 of the first wavelength). Irradiating volume elements of the photocurable resin 20 with the light L1 of the first wavelength only can result in a post-activation of these and adjacent volume elements which results in further curing of these volume elements after they have been irradiated with both the light L1, L2 of the first and the second wavelength and thus, result in improved structural properties of the respective three-dimensional object to be printed.

An example of irradiating the photocurable resin with the light L1 of the first wavelength (spatially) after it is irradiated with the light L2 of the second wavelength which can be derived from Fig. 3 can comprise that irradiating the photocurable resin 20 with the light L2 of the second wavelength ends at a third position p3 and that irradiating the photocurable resin 20 with the light L1 of the first wavelength ends at a fourth position p4, wherein the fourth position p4 is behind the third position p3 in the formation direction. The third position p3 is typically, a position within or at an outer boundary or edge of a volume of the photocurable resin 20 which forms the respective three-dimensional object to be printed and thus, a position inside the respective three-dimensional object to be printed. Particularly, the third position p3 can be a position within a volume of the photocurable resin which forms an outer boundary or edge of the respective three-dimensional object to be printed and thus, a position at a surface of the respective three-dimensional object to be printed. As such, the three-dimensional object to be printed can comprise portions which are located in front of the third position p3 with respect to the formation direction or the three-dimensional object is formed in front of the third position p3 with respect to the formation direction, respectively. Hence, the third position p3 can comprise the last volume element, such as e.g. the last voxel, of the three-dimensional object to be printed with respect to the formation direction. The fourth position p4 can also be a position within a volume of the photocurable resin 20 which forms the respective three-dimensional object to be printed and thus, a position inside the respective three-dimensional object to be printed. Yet, the fourth position p4 can also be a position within a volume of the photocurable resin 20 which does not form the respective three-dimensional object to be printed and thus, a position outside the respective three-dimensional object to be printed.

Another example of irradiating the photocurable resin with the light L1 of the first wavelength (temporally) after it is irradiated with the light L2 of the second wavelength which can be derived from Fig. 3 can comprise that irradiating the photocurable resin with the light L2 of the second wavelength ends at a third time t3 and that irradiating the photocurable resin 20 with the light L1 of the first wavelength ends at a fourth time t4, wherein t4 > t3. The third time t3 typically, corresponds to a time at which a volume of the photocurable resin 20 which forms the respective three-dimensional object to be printed is irradiated. Particularly, the third time t3 can correspond to a time at a volume of the photocurable resin 20 which forms an outer boundary or edge of the respective three-dimensional object to be printed and thus, a position at a surface of the respective three-dimensional object to be printed is irradiated. As such, the three-dimensional object to be printed can comprise portions which are to be printed before the third time t3 or the printing of the three-dimensional object is completed before the third time t3, respectively. Hence, the third time t3 can comprise a time at which the last volume element, such as e.g. the last voxel, of the three-dimensional object to be printed is printed with respect to the formation direction. The fourth time t4 can also correspond to a time at which a volume of the photocurable resin 20 which forms the respective three-dimensional object to be printed is irradiated. Yet, the fourth time t4 can also correspond to a time at which a volume of the photocurable resin 20 which does not form the respective three-dimensional object to be printed is irradiated.

As such, the exemplary embodiments of Fig. 2 and Fig. 3, which can also be combined, show spatially and/or temporally varying the at least one printing parameter, particularly a printing parameter influencing the curing behavior of the photocurable resin 20, can comprise that the photocurable resin 20 is irradiated with the light L1 of the first wavelength, particularly only with the light L1 of the first wavelength, in a volume separate, particularly adjacent, more particularly directly adjacent, to the volume in which the three-dimensional object is to be printed, particularly wherein the volume is spatially and/or temporally before and/or behind the volume in which the three-dimensional object is to be printed with respect to the at least one formation direction of the three-dimensional object. In such a manner, pre- or post-activating the photocurable resin can be effected which can positively influence the structural properties of the three-dimensional object to be printed.

Thus, spatially and/or temporally irradiating the photocurable resin with the light L1 of the first wavelength before or after it is irradiated with the light L2 of the second wavelength can generally comprise that volume elements of the photocurable resin 20 which volume elements do not form part of a three-dimensional object to be printed can be irradiated (only) with the light L1 of the first wavelength. Such volume elements can be positioned, with respect to the formation direction of the three-dimensional object to be printed, before or in front of the volume elements which form part of the three-dimensional object to be printed or after or behind the volume elements which form part of the three-dimensional object to be printed.

It is also conceivable though that volume elements of the photocurable resin 20 which do not form part of a three-dimensional object to be printed can be irradiated (only) with the light L2 of the second wavelength such that the above remarks can also accordingly apply to the light L2 of the second wavelength.

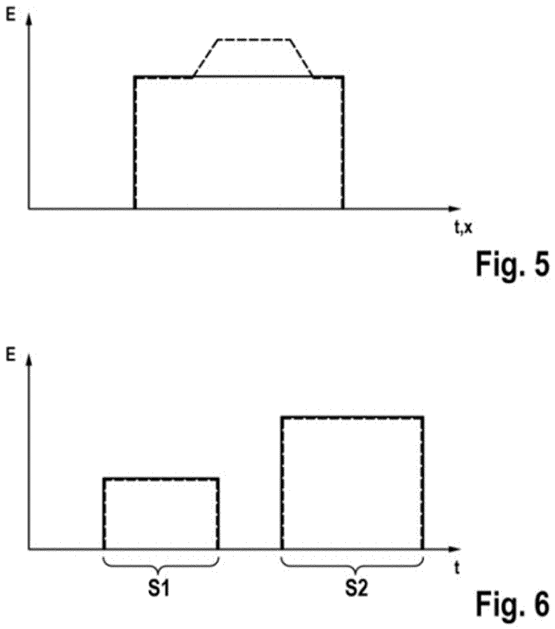

Fig. 4 and Fig. 5 are other diagrams in which the vertical axis represents the energy level of the light L1 of the first wavelength (non-dotted line) and the energy level of the light L2 of the second wavelength (dotted line) and the horizontal axis represents a location x within the container volume 51 or the photocurable resin 20 or the time t, respectively.

Fig. 4 specifically shows that spatially and/or temporally varying the at least one printing parameter, particularly a printing parameter influencing the curing behavior of the photocurable resin 20, can comprise irradiating the photocurable resin 20 with the light L1, L2 of the first wavelength and/or the second wavelength and spatially and/or temporally varying the energy, particularly the energy intensity, of the light L1, L2 of the first wavelength and/or the second wavelength, along the at least one formation direction. Spatially and/or temporally varying the energy, particularly the energy intensity, of the light L1, L2 of the first wavelength and/or the second wavelength, along the at least one formation can also positively influence the structural properties of the three-dimensional object to be printed, e.g. because it enables a control that each volume element of a three-dimensional object to be printed obtains a specific amount of energy which results in a desired curing of the respective volume element. As such, problems based on different degrees of curing of different volume elements of a three-dimensional object to be printed, which typically also lead to undesired structural anisotropy of the three-dimensional object, can be overcome or at least reduced. Likewise, the inhomogeneities caused by the proximity-effect (as explained further above) can be overcome or at least reduced because one or more volume elements in proximity to other volume elements which have already been cured or photopolymerized, respectively can be irradiated with a different energy relative to one or more volume elements which are not in proximity to other volume elements which have already been cured or photopolymerized, respectively.

Fig. 4 particularly shows that spatially and/or temporally varying the energy or energy intensity, respectively can comprise that the energy level of the light L1 of the first wavelength can be varied from a first energy level E1 to at least a second energy level E2, the at least one second energy level E2 being lower than the first energy level E1. Hence, the energy or energy intensity, respectively of the light L1 of the first wavelength can be dynamically or gradually spatially and/or temporally increased or decreased during the irradiation process, particularly with respect to a nominal value which can be, but is not limited to, a minimum or maximum energy or energy intensity, respectively. As such, the energy level of the light L1 of the first wavelength can comprise a peak at the beginning of the irradiation process as is exemplarily indicated in Fig. 4.

Fig. 5 particularly shows that spatially and/or temporally varying the energy or energy intensity, respectively of the light L2 of the second wavelength can comprise that the energy of the light L2 of the second wavelength can be varied from a first energy level to at least a second energy level, the at least one second energy level being higher or lower than the first energy level. Hence, the energy or energy intensity, respectively of the light L2 of the second wavelength can be dynamically or gradually spatially and/or temporally increased or decreased during the irradiation process, particularly with respect to a nominal value which can be, but is not limited to, a minimum or maximum energy level or energy intensity level, respectively.

As another example, spatially and/or temporally varying the energy, particularly the energy intensity, of the light L2 of the second wavelength along the at least one direction can comprise that one or more image elements, e.g. pixels, of respective images corresponding to a cross-sectional geometry of a three-dimensional object to be printed are spatially and/or temporally varied with respect to their energy or energy density, respectively. In other words, a respective projection of one or more images can comprise image elements of different energy or energy density, respectively. Varying the energy or energy density, respectively of respective image elements can comprise energy levels or energy density levels, respectively between minimum energy levels or minimum energy density levels, respectively and maximum energy levels or maximum energy density levels, respectively. Likewise, varying the energy or energy density, respectively of respective lines or points can comprise varying the energy levels or energy density levels, respectively between minimum energy levels or minimum energy density levels, respectively and maximum energy levels or maximum energy density levels, respectively. Varying the energy or energy density, respectively of respective image elements or points or lines, respectively can be effected by controlling a respective irradiation device used for generating respective projections of images or points or lines, respectively.

As another example, spatially and/or temporally varying the energy, particularly the energy intensity, of the light of the second wavelength along the at least one direction can comprise that one or more image elements, e.g. pixels, of respective images which correspond to a cross-sectional geometry of a three-dimensional object to be printed and/or one or more image elements, e.g. pixels, of respective images which do not correspond to a cross-sectional geometry of a three-dimensional object to be printed can be spatially and/or temporally varied such that the energy or energy intensity, respectively does not effect curing of the photocurable resin 20. Hence, spatially and/or temporally varying the energy, particularly the energy intensity, of the light L2 of the second wavelength can comprise that the energy or energy intensity, respectively can be spatially and/or temporally set to a level which does not result in curing of the photocurable resin 20 or to a level which results in undercuring of the photocurable resin 20. Yet, it is also conceivable that spatially and/or temporally varying the energy, particularly the energy intensity, of the light L2 of the second wavelength can comprise that the energy or energy intensity, respectively can be spatially and/or temporally set to a level which results in overcuring of the photocurable resin 20.

It is apparent from Fig. 4 that the photocurable resin 20 can be irradiated with the light L1 of the first wavelength at the first energy level, which can be a comparatively higher energy level compared to a nominal energy level or a second energy level, in an initial volume of the to be printed three-dimensional object which initial volume comprises at most 10%, particularly at most 9%, more particularly at most 8%, more particularly at most 7%, more particularly at most 6%, more particularly at most 5%, more particularly at most 4%, more particularly at most 3%, more particularly at most 2%, more particularly at most 1%, more particularly at most 0.9%, more particularly at most 0.8%, more particularly at most 0.7%, more particularly at most 0.6%, more particularly at most 0.5%, more particularly at most 0.4%, more particularly at most 0.3%, more particularly at most 0.2%, more particularly at most 0.1%, more particularly at most at most 0.09%, more particularly at most 0.08%, more particularly at most 0.07%, more particularly at most 0.06%, more particularly at most 0.05%, more particularly at most 0.04%, more particularly at most 0.03%, more particularly at most 0.02%, more particularly at most 0.01%, of the spatial extension of the three-dimensional object to be printed in the at least one direction. Irradiating the photocurable resin 20 with the light of the first wavelength at a higher energy level in an initial volume of the to be printed three-dimensional object in the at least one direction can particularly, result in compensation or at least reduction of the inhomogeneity caused by the proximity-effect, for instance and thus, lead to three-dimensional objects with less structural anisotropy and improved structural properties.

It is apparent from Fig. 4 that the photocurable resin 20 can be irradiated with the light L1 of the first wavelength at the first energy level, which can be a comparatively higher energy level compared to a nominal energy level or a second energy level, for an initial time of at most 10 sec, particularly at most 9 sec, more particularly at most 8 sec, more particularly at most 7 sec, more particularly at most 6 sec, more particularly at most 5 sec, more particularly at most 4 sec, more particularly at most 3 sec, more particularly at most 2 sec, more particularly at most 1 sec, more particularly at most 0.9 sec, more particularly at most 0.8 sec, more particularly at most 0.7 sec, more particularly at most 0.6 sec, more particularly at most 0.5 sec, more particularly at most 0.4 sec, more particularly at most 0.3 sec, more particularly at most 0.2 sec, more particularly at most 0.1 sec, more particularly at most at most 0.09 sec, more particularly at most 0.08 sec, more particularly at most 0.07 sec, more particularly at most 0.06 sec, more particularly at most 0.05 sec, more particularly at most 0.04 sec, more particularly at most 0.03 sec, more particularly at most 0.02 sec, more particularly at most 0.01 sec, of the overall duration of the irradiation process, particularly the overall duration of the period of the irradiation process in which the photocurable resin 20 is cured by multi-color photopolymerization to print a three-dimensional object. The respective times can correspond to periods of the irradiation process in which at least the first frame, particularly at most the first 100 frames, more particularly at most the first 90 frames, more particularly at most the first 80 frames, more particularly at most the first 70 frames, more particularly at most the first 60 frames, more particularly at most the first 50 frames, more particularly at most the first 40 frames, more particularly at most the first 30 frames, more particularly at most the first 20 frames, more particularly at most the first 10 frames, of a projection of images of the light L2 of the second wavelength is irradiated into the photocurable resin 20.

Alternatively or additionally, spatially and/or temporally varying the at least one printing parameter, particularly a printing parameter influencing the curing behavior of the photocurable resin 20, can comprise varying a focus parameter, such as e.g. the size and/or the position, of the or a focus of the light L1 of the first wavelength and/or varying an image parameter, e.g. the size and/or the position, of an image or of at least one image element, e.g. a pixel, of an image projected with the light L2 of the second wavelength. Hence, a focus parameter, such as e.g. the size and/or the position, of the or a focus of the light L1 of the first wavelength, which can comprise a plurality of light beams extending through the photocurable resin, e.g. in the shape of a light sheet, can be a printing parameter which can be varied during the irradiation process which enables e.g. spatially and/or temporally influencing the curing result in the formation zone FZ and the resolution of features of the three-dimensional object to be printed, respectively. Varying one or more focus parameters of the light L1 of the first wavelength can be implemented by one or more optical elements, such as e.g. (moveable) lenses, assigned to the irradiation device 30 used for generating the light L1 of the first wavelength and respective light beams, particularly light beams forming a light sheet, extending through the photocurable resin 20, for instance. Respective optical elements can form part of a focus adjusting device of the irradiation device which can be configured for adjusting one or more focus parameters of the light L1 of the first wavelength. Additionally or alternatively, an image parameter, such as e.g. the size and/or the position, of the or a projected image or at least one image element of the light L2 of the second wavelength, which can comprise a projection of images corresponding to a cross-sectional geometry of a three-dimensional object to be printed, can be a printing parameter which can be varied during the irradiation process which enables e.g. spatially and/or temporally influencing the curing result in the formation zone FZ and the resolution of features of the three-dimensional object to be printed, respectively. Varying one or more image parameters of an image of the light L2 of the second wavelength can be implemented with one or more optical elements, such as e.g. (moveable) lenses, pixel generators, etc., assigned to the irradiation device 30 used for generating the light L2 of the second wavelength and respective images corresponding to a cross-sectional geometry of a three-dimensional object to be printed, for instance. Respective optical elements can form part of an image adjusting device of the irradiation device 30 which can be configured for adjusting one or more image parameters of the light L2 of the second wavelength. A respective image adjusting device can be a hardware- and/or software-embodied component of a light projection device, such as e.g. a digital light projection device, for instance.

Fig. 4 and 5 also generally indicate that spatially and/or temporally varying the energy of the light L2 of the second wavelength can comprise varying the energy or energy distribution of at least a part, e.g. a pixel, of at least one projected image corresponding to a cross-sectional geometry of a three-dimensional object to be printed or of at least one point or line of at least one light beam corresponding to a cross-sectional geometry of a three-dimensional object to be printed. Particularly, the energy of the light L2 of second wavelength can be varied along the at least one direction such that, with respect to the formation direction, upstream portions of the three-dimensional object are exposed to different energy levels of the light L2 of the second wavelength than downstream portions of the three-dimensional object. As indicated above, spatially and/or temporally varying the energy of the light L2 of the second wavelength can lead to three-dimensional objects with less structural anisotropy and improved structural properties.

As an example, spatially and/or temporally varying the energy or energy intensity, respectively of the light L2 of the second wavelength can comprise varying the energy or energy intensity, respectively of at least a part of at least one image, particularly at least one image element, e.g. a pixel, of the image, in a sequence comprising at least three energy levels E1, E2, and E3 or energy intensity levels, respectively E1, E2, and E3, wherein the energy level or energy intensity level, respectively is changed from E1 to E2, with E2>E1, and wherein the energy level or energy intensity level, respectively is changed from E2 to E3 and E2>E3 and particularly E3>E1, for instance. Particularly, the first energy level E1 can be assigned to one or more volume elements of the photocurable resin 20 in which no or only little photopolymerization of the photocurable resin 20 is desired; such volume elements of the photocurable resin 20 can comprise volume elements which do not form part of a three-dimensional object to be printed. As such, the first energy level can also be zero (E1=0). Particularly, the second energy level E2 can be assigned to one or more volume elements of the photocurable resin 20 which do form part of the three-dimensional to be printed. Specifically, the second energy level E2 can be assigned to one or more volume elements of the photocurable resin 20 which form part of at least the first volume element of three-dimensional to be printed with respect to the formation direction. Particularly, the second energy level E2 can be assigned to one or more volume elements of the photocurable resin 20 which do form part of the three-dimensional to be printed. Specifically, the third level E3 can be assigned to one or more volume elements of the photocurable resin 20 which form part of further volume elements of the three-dimensional object to be printed which further volume elements are located behind the first volume element of three-dimensional to be printed with respect to the formation direction. Further, a fourth energy level E4 can be implemented and assigned to one or more volume elements of the photocurable resin 20 which do not form part of the three-dimensional object to be printed. Particularly, the fourth energy level E4 can be assigned to volume elements of the photocurable resin which are located behind the last volume elements of the photocurable resin which form part of the three-dimensional object to be printed. As such, the fourth energy level can also be zero (E4=0).

According to another exemplary embodiment, spatially and/or temporally varying the at least one printing parameter, particularly a printing parameter influencing the curing behavior of the photocurable resin 20, can comprise irradiating the photocurable resin 20 with the light L1 of the first wavelength and/or the light L2 of the second wavelength while the at least one formation zone FZ is not moving relative to the or a respective container 50 during the irradiation process or while the at least one formation zone FZ is moved at a varied motion rate which is lower than the nominal motion rate. A respective varied motion rate can also be zero. Hence, also the motion rate at which the at least one formation zone FZ is moved, particularly relative to the or a respective container 50, is a printing parameter which can be spatially and/or temporally varied, e.g. to achieve printing three-dimensional objects having higher structural isotropy.

As an example, irradiating the photocurable resin 20 with the light L1 of the first wavelength and/or the light L2 of the second wavelength while the at least one formation zone FZ is not moving relative to the or a respective container 50 during the irradiation process or while the at least one formation zone FZ is moving at a motion rate which is lower than the nominal motion rate can comprise irradiating the photocurable resin 20 with the light L1 of the first wavelength while the photocurable resin 20 moves comparatively slow or does not even move relative to container 50 such that the respective volume elements of the photocurable resin 20 are irradiated with the light L1 of the first wavelength for a comparatively long period. In this period, the light L2 of the second wavelength can comprise constant images or stationary images, for instance. Alternatively, in this period, no light L2 of the second wavelength is irradiated into the photocurable resin 20 and the working volume, for instance.

According to another exemplary embodiment, spatially and/or temporally varying the at least one printing parameter, particularly a printing parameter influencing the curing behavior of the photocurable resin 20, can also comprise irradiating the photocurable resin with the light L1, L2 of the first and/or second wavelength while the at least one formation zone FZ is moved along two different directions. Hence, also the motion direction along which the at least one formation zone FZ is moved, particularly relative to the or a respective container 50, is a printing parameter which can be spatially and/or temporally varied, e.g. to achieve printing three-dimensional objects having higher structural isotropy.

As an example, the at least one formation zone FZ can be moved along a first motion path in a first motion direction while it is irradiated with the light L1, L2 of the first and/or the second wavelength, particularly while it is irradiated only with the light L1 of the first wavelength, and the at least one formation zone FZ is moved along a second motion path in a second motion direction, particularly opposite the first direction, while it is irradiated with the light L1, L2 of the first and/or the second wavelength, particularly while it is irradiated with the light L1, L2 of both the first and second wavelength. Particularly, the first motion direction can be a motion direction away from an irradiation device 30, particularly a digital light projection device, of an apparatus 10 used for implementing the method which generates the light L2 of the second wavelength and the second motion direction can be opposition thereto, or vice versa.

As another example, the first motion path can differ, particularly in length, from the second motion path. Particularly, the first motion path can be shorter than the second motion path. As such, the irradiation of the photocurable resin 20 with the light of the first wavelength applied to the photocurable resin 20 when the at least one formation zone FZ is moved along the first motion path can be shorter compared to when the at least one formation zone FZ is moved along the second motion path.

Fig. 6 is another diagram in which the vertical axis represents the energy level of the light L1 of the first wavelength (non-dotted line) and the energy level of the light L2 of the second wavelength (dotted line) and the horizontal axis represents the time t.

Fig. 6 specifically shows that the irradiation process can comprise irradiating the photocurable resin 20 with the light L1, L2 of the first wavelength and the second wavelength to form a pre-polymerized three-dimensional pre-object in a first irradiation step S1, and wherein the pre-polymerized three-dimensional pre-object is irradiated with the light L1, L2 of the first wavelength and the second wavelength in a second irradiation step S2 which causes formation of the three-dimensional object, particularly after completion of the first irradiation step and/or after completion of the at least one further irradiation step, more particularly after completion of a first further irradiation step of a plurality of further irradiation steps. As such, also the number of respective irradiation steps can be a printing parameter which can be spatially and/or temporally varied. Notably, this embodiment can comprise the formation of a pre-polymerized three-dimensional pre-object in the first irradiation step S1, which three-dimensional pre-object can already comprise a shape and/or dimension (substantially) corresponding to the three-dimensional object which is to be printed. However, the three-dimensional pre-object can differ from the actual three-dimensional object which is to be printed in the degree of curing of the photocurable resin. In other words, the three-dimensional pre-object can have a lower degree of curing of the photocurable resin, e.g. the three-dimensional pre-object can have a degree of curing which does not allow handling of the three-dimensional pre-object for instance. Yet, printing the actual three-dimensional object via a respective intermediate pre-object can result in improved structural properties of the actual three-dimensional object.

Notably, the respective energy levels of the light L1, L2 of the first and/or second wavelength applied in the first and second irradiation step S1, S2 can differ (as exemplarily shown in Fig. 6). but can also be (substantially) the same.

As can also be derived from Fig. 6, the photocurable resin 20 can be irradiated with the light L1, L2 of the first wavelength and the second wavelength to form a pre-polymerized three-dimensional pre-object in a first irradiation step S1, wherein the pre-polymerized three-dimensional pre-object is irradiated with the light L1, L2 of the first wavelength and the second wavelength which causes further polymerization of the pre-polymerized three-dimensional object in a second irradiation step S2, and wherein the second irradiation step S2 can be repeated multiple times. Notably, the formation zone FZ can be moved along a respective first motion path in a first motion direction in the first irradiation step S1 and along a respective second motion path in a second motion direction, particularly opposite the first motion direction, in the at least one second irradiation step S2.

Generally, the photocurable resin 20 can be irradiated with the light L1 of the first wavelength forming a pre-polymerized photocurable resin in a first irradiation step, and wherein the pre-polymerized photocurable resin is irradiated with the light L1, L2 of the first wavelength and the second wavelength in a further irradiation step which causes formation of the three-dimensional object, particularly after completion of the first irradiation step and/or after completion of the at least one further irradiation step, more particularly after completion of a first further irradiation step of a plurality of further irradiation steps. Also printing the actual three-dimensional object via a respective intermediate pre-polymerized photocurable resin can result in improved structural properties of the actual three-dimensional object.

According to another exemplary embodiment, spatially and/or temporally varying the at least one printing parameter, particularly a printing parameter influencing the curing behavior of the photocurable resin, can comprise, which particularly applies for embodiments of the method in which multiple separate three-dimensional objects are to be printed, particularly simultaneously, setting the start position and/or the start time and/or the end position and/or the end time for irradiating the photocurable resin with the light of the second wavelength for printing a first three-dimensional object different from the start position and/or the start time for irradiating the photocurable resin with the light of the second wavelength for printing a further three-dimensional object. Particularly, the exemplary embodiment can enable that the photocurable resin is still irradiated with light of the second wavelength, e.g. by so-called dark images, even though printing of at least one three-dimensional object has been completed which will result in that the respective three-dimensional object which has been completed first will have a high(er) structural fidelity. Notably, this exemplary embodiment particularly applies to lateral arrangement of the multiple three-dimensional objects to be printed. As such, their respective formation directions are arranged in parallel.

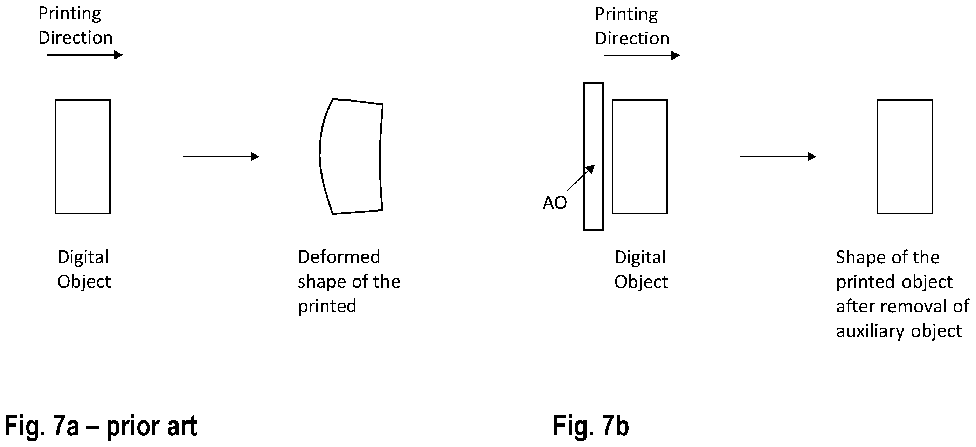

Fig. 7 comprises Fig. 7a and 7b, wherein Fig. 7a shows, as a top view, a principle drawing of a method according to the prior art and Fig. 7b shows, as a top view, a principle drawing of a method according to another exemplary embodiment. The expression "digital object" used in Fig. 7 refers to the representation of the digital file, such as e.g. a build file, e.g. in the STL-format, underlying the volumetric printing process.

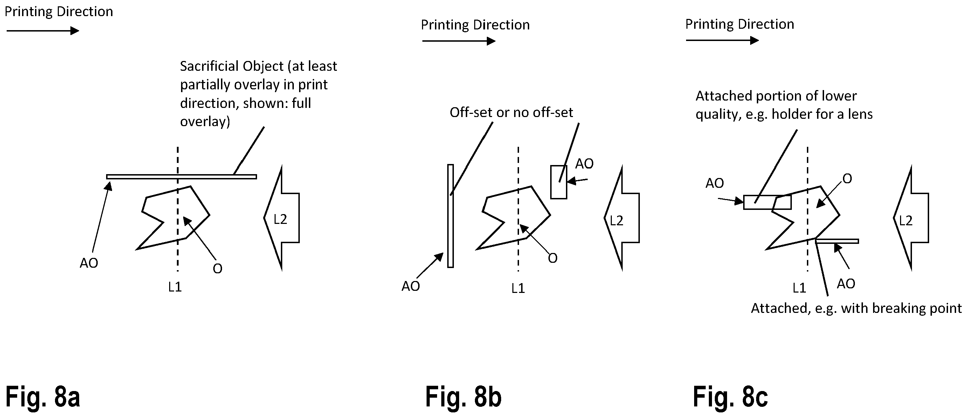

Fig. 8 comprises Fig. 8a - 8c which show, as top-views, principle drawings of a method according to another exemplary embodiment. The text elements of Fig. 8a - 8c are only of exemplary nature and thus, not limiting. In Fig. 8a - 8c, the light sheet is indicated by the dotted line and the expression "L1", whereas a light projection of the light of the second wavelength is indicated by the big arrow and the expression "L2".

Fig. 7b as well as Fig. 8a - 8c particularly, show exemplary embodiments, in which spatially and/or temporarily varying the at least one printing parameter, particularly a printing parameter influencing the curing behavior of the photocurable resin, is be realized by printing an auxiliary object AO. Particularly, printing of the auxiliary object AO can be spatially and/or temporarily started before the actual three-dimensional object O (see e.g. Fig. 8a - 8c), i.e. the three-dimensional object O which is actually to be manufactured, is printed. More particularly, printing of the or an auxiliary object AO can be completed before the printing of the actual three-dimensional object O is started. In either case, a respective auxiliary object AO can be printed in a first volume of the container 50 and the actual three-dimensional object O to be printed can be printed in a second volume of the container 50, wherein the second volume is located spatially and/or temporarily behind and/or after the first volume with respect to the printing direction which is indicated by the arrow identifying printing direction in Fig. 7 and 8. As such, printing of an auxiliary object AO can comprise that a light sheet of the light of first wavelength is first moved through the first volume along the printing direction, particularly relative to the container 50 (as indicated above) comprising the photocurable resin, to generate the or an auxiliary object AO by multi-color photopolymerization (as specified above) and then the light sheet of the light of first wavelength is moved through the second volume. Yet, when the light sheet moved through the second volume, the intensity of the light of the second wavelength can be zero or at least (significantly) reduced such that the photocurable resin in the second volume is (essentially) only subject to the light of the first wavelength.

The actual three-dimensional object O can be printed with one or more target properties, which are typically, defined with respect to an intended application or use of the three-dimensional object O. As an example, the actual three-dimensional object O can have target shape or optical properties, which are defined with respect to an intended application or use of the three-dimensional as an optical element, such as e.g. a lens. The auxiliary object AO can differ in at least one property from the one or more target properties. Referring to the aforementioned example, the auxiliary object AO can thus, deviate from the intended shape or have lower optical properties than the actual three-dimensional object O to be printed. As such, the quality requirements for the at least one auxiliary object AO can be lower than the quality requirements for the actual three-dimensional object O to be printed.

As is apparent from Fig. 8a and 8b, at least one auxiliary object OA can have a longitudinal shape having a spatial extension direction along the printing direction and thus, the motion direction of the light sheet through the container 50. As an example shown in Fig. 8a and 8b, the or at least one auxiliary object AO can be or comprise a stick-shape having a spatial extension direction along the printing direction and thus, the motion direction of the light sheet through the container 50. In either case, the volume of the or an auxiliary object AO can be smaller than the volume of the or an actual three-dimensional object O to be printed. As an example, the volume of the or an auxiliary object AO can be at least one of: 1/2, 1/3, 1/4, 1/5, 1/6, 1/7, 1/8, 1/9, 1/10, etc., of the volume of the actual three-dimensional object O to be printed.

The auxiliary object AO can be provided with at least one function. As an example, the auxiliary object AO can be provided with a supporting function which can enable supporting a three-dimensional object O attached thereto, e.g. for purposes of removing the three-dimensional object from a container (see e.g. Fig. 8c).

The auxiliary object AO can be or comprise a sacrificial object, which can be discarded after printing. Particularly, the auxiliary object AO can be attached to the at least one three-dimensional object to be printed (see e.g. Fig. 8c). As such, there can be one or more connection portions CP, such as e.g. one or more connection points, one or more connection lines, or one or more connection areas, via which the or an auxiliary object AO is physically connected with the actual three-dimensional object O. Respective connection portions CP can comprise predetermined separation or breaking structures which enable, removing the respective auxiliary object AO from the actual three-dimensional object O, e.g. via breaking, after printing of the actual three-dimensional object O is completed. Alternatively, the or an auxiliary object AO can also be adjacently arranged, i.e. spatially offset (as indicated in Fig. 8a, 8b), relative to the three-dimensional object O to be printed such that there are no connection portions via which the auxiliary object AO is physically connected with the actual three-dimensional object O. The distance between the or a respective auxiliary object AO and the actual three-dimensional object O to be printed can be small, preferably <10 mm, more preferably <5 mm, even more preferably below 1 mm, still more preferably <500 µm, most preferably <100 µm.

The embodiment of Fig. 7b exemplifies an embodiment in which spatially and/or temporarily varying the at least one printing parameter, particularly a printing parameter influencing the curing behavior of the photocurable resin can comprise an inhomogeneous variation of the temperature and/or density of the photocurable resin within the container 50. As such, the photocurable resin can have a higher temperature and/or density in a location L1 compared to a location L2, particularly at the same time, especially at the start time of the print of the three-dimensional object O. This can be realized by printing at least one auxiliary object (see Fig. 7b), particularly a sacrificial object as indicated above, first and printing the actual three-dimensional object O thereafter. The auxiliary object AO can have a shape and/or size which can be adapted to the actual three-dimensional object to printed. Particularly, the at least one auxiliary object AO can have the shape of a plate, e.g. a rectangular, polygonal or round plate. The position and/or orientation of the plate within the container 50 can be such that a normal on the main extension plane is (substantially) parallel to the printing direction and thus, the direction along which the at least one formation zone is moved relative to the container 50 (as indicated above) comprising the photocurable resin. This enables that any thermal energy, e.g. heat generated by polymerization of the photocurable resin, generated when printing the auxiliary object AO can effect a temperature change, particularly a temperature increase and/or temperature gradient, in the volume in which the at least one three-dimensional object O is to be printed.

Fig. 7b further illustrates that the surface of the auxiliary object AO can have a corresponding shape or an inverted shape of the surface of the actual three-dimensional object to be printed, particularly the or an opposing surface of the three-dimensional object to be printed. As an example, when the actual three-dimensional object O to be printed has a surface with a concave shape, the auxiliary object AO can have a surface with a convex shape.

Surprisingly, it has been found that printing an auxiliary object AO first and the actual three-dimensional object O to be printed thereafter can lead to an improved structural fidelity of the actual three-dimensional object O (as is apparent from a comparison of Fig. 7a and 7b). Without being bound by any theory, this is explained by the fact that during the polymerization of photocurable resin to generate the auxiliary object AO, the temperature of the photocurable resin in the volume in which the actual three-dimensional object O is to be generated can increase due to heat of polymerization, which leads to an expansion of the surrounding photocurable resin in proximity to already printed portions of the object. Therefore, portions of the actual three-dimensional object O which are printed later will be generated in an expanded resin (the expansion resulting from the temperature increase). Printing an auxiliary object AO before the actual three-dimensional object O, can lead to an expansion of the resin in the volume in which the actual three-dimensional object O is to be printed, such that first portions of the three-dimensional object O can be generated in already expanded resin, which can lead to a more homogeneous shrink after cooling equilibration of the photocurable resin.

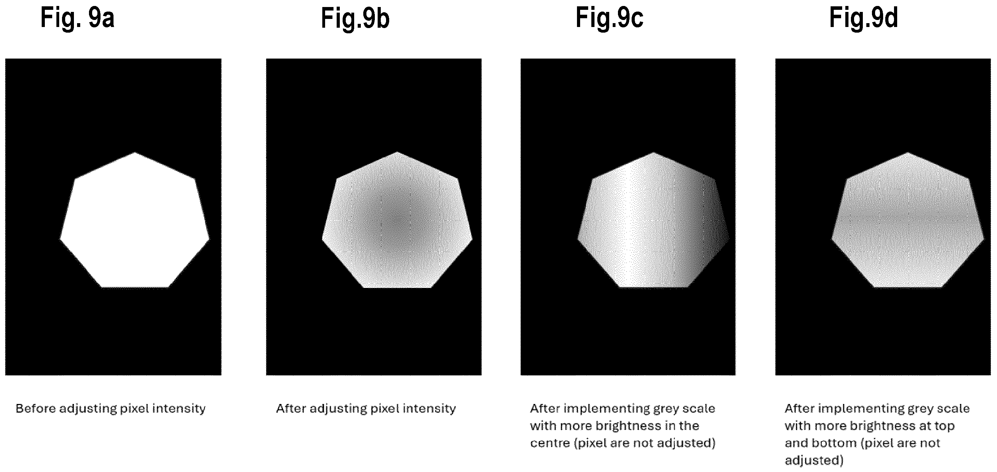

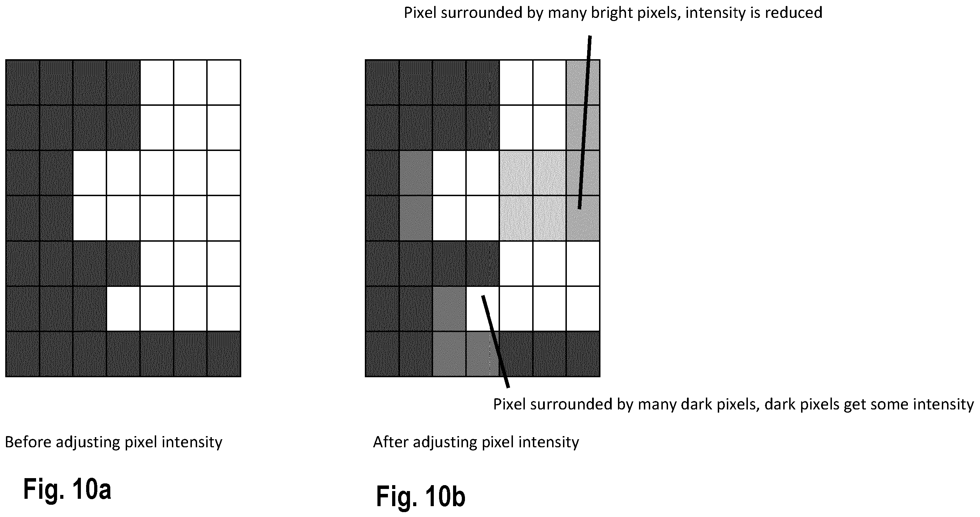

Fig. 9 and 10 each show principle drawings of a method according to other exemplary embodiments. Fig. 9 and 10 particularly, show diverse exemplary principles how gray-scaling can be used in connection with the principles of spatially and/or temporally varying at least one printing parameter as specified herein.

Fig. 9a - 9c specifically illustrates how gray-scaling, particularly implemented by varying the intensity how one or more pixels of a projected image of the second wavelength, can lead to different intensity distributions within a projected image of the second wavelength. Fig. 9a shows a situation before varying (adjusting) the pixel intensity, Fig. 9b show a situation after varying (adjusting) the pixel intensity, Fig. 9c shows a situation without pixel adjustments after applying gray scaling, e.g. by applying a gray-scaling filter with more brightness (more intensity) at the center of the projected image, and Fig. 9d shows a situation without pixel adjustments after applying gray scaling, e.g. by applying a gray-scaling filter with more brightness (more intensity) top and bottom of the projected image.

It is further apparent from Fig. 9 and 10, that the spatial and/or temporal variation of at least one printing parameter can enable that each volume element of the photocurable resin can be irradiated with an individual second wavelength. As an example, a first pixel of a projected image of the light of the second wavelength can be irradiated with a first specific wavelength, such as e.g. green light, and a second pixel of the or another projected image of the light of the second wavelength can be irradiated with a second specific wavelength, such as e.g. red light, wherein both specific wavelengths can have (substantially) the same physical intensity. The individual specific first and specific second wavelength, which both represent a second wavelength, can e.g. be chosen according to the absorption spectra of the photocurable resin and a photoinitiator, particularly of the intermediate state of the photoinitiator, of the photocurable resin, respectively. Particularly, a second wavelength with a large overlapping area with the absorption spectrum of the intermediate state of the photoinitiator can result in a higher degree of curing compared to a second wavelength which has only little or no overlap with the absorption spectrum of the intermediate state.

Generally, the expression "white" or "high intensity" can refer to a second wavelength where the intermediate state of the photoinitiator of the photocurable resin has a high extinction coefficient, particularly the absorption maximum, and as such absorbs more of the light of the second wavelength. "Black" or "low intensity" can refer to a second wavelength where the intermediate state of the photoinitiator has a lower extinction coefficient, particularly 0, and as such absorbs less of the light of the second wavelength or no light of the second wavelength. "Gray" can refer to a second wavelength where the extinction coefficient the intermediate state of the photoinitiator of the photocurable resin is between "white" and "black" or "gray" can refer to second wavelength which comprises a mixture of "white" and "black". As such an intensity variation with respect to the process can be accomplished by alternating the second wavelength, although the physical light intensity may be substantially the same. An intensity distribution can thus, refer to pixels having light of a different color all having substantially the same physical intensity.

Particularly, the inhomogeneous intensity distribution of the light of the second wavelength can be set according to the distribution of the photoinitiator of the photocurable resin in the intermediate state, which results, as explained above, from the irradiation of the photocurable resin with the light of the first wavelength. More particularly, the intermediate state of the photoinitiator of the photocurable resin can show fluorescence upon irradiation with the light of the first wavelength, which can be recorded by a camera, particularly a camera taking an image of the working volume from a position orthogonal to the light sheet. The obtained brightness of the individual pixels of the fluorescence image can correspond to the concentration of the photoinitiator molecules in the intermediate state. As an example, the fluorescence image can be converted into a gray scale image, followed by inverting black and white values of all pixels. The resulting image represents an improved intensity distribution which can be used for adjusting the intensity of the projected images of the light of the second wavelength during the printing process. The gray value of each pixel of the resulting image can be used to calculate a gray value for each pixel of the images which are projected during the printing process. Particularly, the gray value from the resulting image can be multiplied with a factor, which is constant for all pixels of at least one image.

The intensity variation of the light of the second wavelength can be effected by processing, particularly software-based processing, of one or more images of the light of the second wavelength. A respective processing can comprise an application or implementation of at least one gray scaling profile according to at least one of the described embodiments to respective images of the light of the second wavelength which results in an inhomogeneous intensity distribution of the light of the second wavelength. A respective processing can particularly, comprise combining two or more different gray scaling profiles.

The method can be implemented with at least one light modulation device assigned to the or an irradiation device, wherein the at least one light modulation device is configured to modulate the spatial extension direction of two or more light beams of the multiple beams of the light of the first wavelength in the at least one light plane such that the two or more light beams extend in a non-parallel arrangement relative to each other, and/or to generate at least two light beams of the first wavelength which have different polarizations or polarization states in at least one point within the working volume, and/or to generate at least two light beams which have different wavelengths, particularly within a specific wavelength range, in at least one point within the working volume. The at least one light modulation device can thus, be configured to generate at least two light beams of the first wavelength which have different polarizations or polarization states in at least one point within the working volume, and/or to generate at least two light beams which have different wavelengths, particularly within a specific wavelength range, in at least one point within the working volume. This can be a separate configuration of the at least one light modulation device, particularly independent from the configuration in which the at least one light modulation device is configured to modulate the spatial extension direction of two or more light beams of the multiple beams in the at least one light plane such that the two or more light beams extend in a non-parallel arrangement relative to each other.

Principles of angular diversity can comprise generating or using light beams of the first wavelength extending at an angle relative to each other such that they intersect in at least one point, e.g. an intersection point. Particularly, angular diversity can comprise generating or using light beams of the first wavelength extending at different angles relative to each other such that they intersect in at least two intersection points, more particularly generating many intersection points distributed over the light sheet. Particularly, principles of angular diversity can be implemented at an angle, particularly orthogonal, to the formation direction in which the object is to be printed, particularly to avoid or reduce a loss of resolution in the formation direction.

Specifically, the at least one light modulation device can be configured to affect, particularly to at least partly reduce, the optical coherence of light beams within the at least one light plane by deliberately changing the spatial extension direction and/or orientation of at least two light beams such that at least two light beams extend in a non-parallel arrangement relative to each other which results in that two or more light beams intersect at one or more intersection points within the at least one light sheet. Changing the spatial extension direction and/or orientation of at least two light beams such that at least two light beams extend in a nonparallel arrangement relative to each other within the at least one light plane also results in that the at least one light plane comprises light beams having angled spatial extension directions while traversing, travelling or propagating through the working volume. Specifically, at least two light beams can traverse, travel or propagate through the working volume at an angle different from 0° relative to each other. An intersection of at least two light beams at one or more intersection points within the at least one light plane can also comprise that at least two light beams can overlay at the one or more intersection points.

When one or more of the above principles, such as e.g. the principles of angular diversity, are applied to a light sheet of the light of the first wavelength, the determination of an ideal gray scaling for individual images can require high computational effort. Therefore, the application of simple gradients, gray filters obtained from measurements of the intermediate state distribution via fluorescence imaging, or the determination of gray scale values independent from the light of the first wavelength are preferred when the principles of angular diversity are applied to the light sheet.

The selection of a concrete intensity distribution profile for each projected image of the light of the second wavelength can be based on simulations, modelling, or experimental results, which describe the intensity distribution of a light sheet extending through the working volume or the absorption behavior or properties of each volume element or voxel in the working volume, which can be effected by switching the dual color photoinitiator from the initial state to the intermediate state and/or by bleaching of the intermediate state due to initiation and formation of absorbing side products, for instance. As such, the photophysical process, e.g. absorption, (photo)switching, and the physical parameters, e.g. light intensities, light sheet thickness, can be included in the modelling.

Further, experimental results can be used as data on printed objects, particularly structural data, and applied process parameters, particularly process parameters including gray scaling information, to train one or more algorithms or a software comprising the same. Respective algorithms can implement principles of artificial intelligence and machine learning, respectively which can be used to find improved process parameters, particularly process parameters comprising gray scaling information.

Fig. 10 shows exemplary pixel arrays comprising an exemplary arrangement of 7x7 pixels. Fig. 10 specifically exemplifies a principle in which, if a pixel that should be 'off' (black) is surrounded by many white pixels, it naturally remains off. If a pixel that should be 'off' is surrounded by a few white pixels, it becomes brighter because the white is not bright enough to harden. Here, the proximity effect is exploited positively. If a pixel that should be "on" (white) is surrounded by many white pixels, it becomes darker. If a pixel that should be 'on' is surrounded by many black pixels, it becomes brighter.

In either of the embodiments, the formation time of the three-dimensional object can be at most 1 min per 1 mm extension of the three-dimensional object in the at least one direction. As such, the method can be implemented with high printing speeds which is another exemplary printing parameter which can influence the curing behavior of the photocurable resin 20.

One, more, or all aspects mentioned in connection with at least one embodiment can be combined with one, more, or all aspects mentioned in connection with at least one other embodiment.

## Claims

1. A method for volumetric printing a three-dimensional object by multi-color photopolymerization of a photocurable resin, which comprises an irradiation process of irradiating, on basis of a plurality of printing parameters, a photocurable resin with light of a first wavelength and light of a second wavelength, different from the first wavelength, to form, by multi-color photopolymerization, a three-dimensional object in at least one direction, wherein the light of the first wavelength and the light of the second wavelength intersect in a formation zone, wherein the method comprises spatially and/or temporally varying at least one printing parameter, particularly a printing parameter influencing the curing behavior of the photocurable resin, during the irradiation process.

2. The method of any one of the preceding claims, wherein spatially and/or temporally varying at least one printing parameter, particularly a printing parameter influencing the curing behavior of the photocurable resin, comprises that the photocurable resin is irradiated with the light of the first wavelength before it is irradiated with the light of the second wavelength, wherein irradiating the photocurable resin with the light of the first wavelength particularly starts at a position p1 and wherein irradiating the photocurable resin with the light of the second wavelength starts at a position p2, wherein p2 is behind p1 in the formation direction; and/or wherein irradiating the photocurable resin with the light of the first wavelength particularly starts at a time t1 and wherein irradiating the photocurable resin with the light of the second wavelength starts at a time t2, wherein t2 > t1.

3. The method of any one of the preceding claims, wherein spatially and/or temporally varying at least one printing parameter, particularly a printing parameter influencing the curing behavior of the photocurable resin, comprises that the photocurable resin is irradiated with the light of the first wavelength after it is irradiated with the light of the second wavelength, wherein irradiating the photocurable resin with the light of the second wavelength particularly ends at a position p3 and wherein irradiating the photocurable resin with the light of the first wavelength ends at a position p4, wherein p4 is behind p3 in the formation direction, and/or wherein irradiating the photocurable resin with the light of the second wavelength particularly ends at a time t3 and wherein irradiating the photocurable resin with the light of the first wavelength ends at a time t4, wherein t4 > t3.

4. The method of any one of the preceding claims, wherein spatially and/or temporally varying at least one printing parameter, particularly a printing parameter influencing the curing behavior of the photocurable resin, comprises that the photocurable resin is irradiated with the light of the first wavelength in a volume separate, particularly adjacent, more particularly directly adjacent, to the volume in which the three-dimensional object is to be printed, particularly wherein the volume is before and/or behind the volume in which the three-dimensional object is to be printed with respect to the at least one direction of the three-dimensional object.

5. The method of any one of the preceding claims, wherein spatially and/or temporally varying at least one printing parameter, particularly a printing parameter influencing the curing behavior of the photocurable resin, comprises irradiating the photocurable resin with the light of the first wavelength and/or the second wavelength and spatially and/or temporally varying the energy or the energy intensity of the light of the first wavelength and/or the second wavelength along the at least one direction.

6. The method of claim 5, wherein spatially and/or temporally varying the energy of the first wavelength comprises that the energy of the light of the first wavelength is varied from a first energy level to at least a second energy level, the at least one second energy level being smaller than the first energy level; and/or wherein spatially and/or temporally varying the energy of the first wavelength comprises that the energy of the light of the first wavelength is varied from a first energy level to at least a second energy level, the at least one second energy level being higher than the first energy level, wherein the photocurable resin is particularly irradiated with the light of the first wavelength at the first energy level in an initial volume of the to be printed three-dimensional object which comprises at most 5%, particularly at most 3%, more particularly at most 1%, of the spatial extension of the three-dimensional object to be printed in the at least one direction, and/or wherein the photocurable resin is irradiated with the light of the first wavelength at the first energy level for an initial time of at most 10 seconds, particularly at most 5 seconds, more particularly at most 1 second, even more particularly at most 0.1 second, most particularly at most 0.01 second.

7. The method of any one of claims 5 or 6, wherein spatially and/or temporally varying the energy of the second wavelength comprises varying the energy or energy distribution of at least a part, e.g. a pixel, of at least one image corresponding to a cross-sectional geometry of a three-dimensional object to be printed or of at least one point or line of at least one light beam corresponding to a cross-sectional geometry of a three-dimensional object to be printed, wherein spatially and/or temporally varying the energy of the second wavelength particularly comprises varying the energy of at least a part of the image, particularly at least one pixel of the image, in a sequence comprising at least three energy levels E1, E2, and E3, wherein the energy level is changed from E1 to E2 and E2>E1 and wherein the energy level is changed from E2 to E3 and E2>E3 and particularly E3>E1..

8. The method of any one of the preceding claims, wherein spatially and/or temporally varying at least one printing parameter, particularly a printing parameter influencing the curing behavior of the photocurable resin, comprises varying a focus parameter of the light of the first wavelength and/or varying an image parameter of an image or at least one image element, e.g. a pixel, of an image projected with the light of the second wavelength.

9. The method of any one of the preceding claims, wherein spatially and/or temporally varying at least one printing parameter, particularly a printing parameter influencing the curing behavior of the photocurable resin, comprises irradiating the photocurable resin with the light of the first wavelength and/or the light of the second wavelength while the at least one formation zone is not moved relative to the container during the irradiation process or while the at least one formation zone is moved at a motion rate which is lower than the nominal motion rate.

10. The method of any one of the preceding claims, wherein the irradiation process comprises irradiating the photocurable resin with the light of the first wavelength and the light of the second wavelength to form a pre-polymerized three-dimensional pre-object in a first irradiation step, and wherein the pre-polymerized three-dimensional pre-object is irradiated with the light of the first wavelength and the second wavelength in a further irradiation step which causes formation of the three-dimensional object, particularly after completion of the first irradiation step and/or after completion of the at least one further irradiation step, more particularly after completion of a first further irradiation step of a plurality of further irradiation steps, wherein the photocurable resin is particularly irradiated with the light of the first wavelength and the second wavelength to form a pre-polymerized three-dimensional pre-object in a first irradiation step, wherein the pre-polymerized three-dimensional pre-object is irradiated with the light of the first wavelength and the second wavelength which causes further polymerization of the pre-polymerized three-dimensional object in a second irradiation step, and wherein the second irradiation step can be repeated multiple times.

11. The method of any one of the preceding claims, wherein the photocurable resin is irradiated with the light of the first wavelength resulting in a pre-polymerized photocurable resin in a first irradiation step, and wherein the pre-polymerized photocurable resin is irradiated with the light of the first wavelength and the second wavelength in a further irradiation step which causes formation of the three-dimensional object, particularly after completion of the first irradiation step and/or after completion of the at least one further irradiation step, more particularly after completion of a first further irradiation step of a plurality of further irradiation steps.

12. The method of any one of the preceding claims, wherein spatially and/or temporally varying at least one printing parameter, particularly a printing parameter influencing the curing behavior of the photocurable resin comprises irradiating the photocurable resin while the at least one formation zone is moved along two different directions.

13. The method of claim 12, wherein the at least one formation zone is moved along a first motion path in a first motion direction while it is irradiated with the light of the first and/or the second wavelength, particularly while it is irradiated only with the light of the first wavelength, and wherein the at least one formation zone is moved along a second motion path in a second motion direction, particularly opposite the first direction, while it is irradiated with the light of the first and/or the second wavelength, particularly while it is irradiated with the light of both the first and second wavelength, wherein the first motion path is particularly different, particularly in length, from the second motion path, particularly wherein the first motion path is shorter than the second motion path.

14. The method of any one of the preceding claims, wherein the formation time of the three-dimensional object is at most 1 min per 1 mm extension of the three-dimensional object in the at least one direction.

15. The method of any one of the preceding claims, wherein irradiating the photocurable resin with the light of the first wavelength causes one or more photoinitiator molecules of the photocurable resin to transfer from an initial state into an intermediate state with changed optical properties compared to the initial state, such that the molecules of the one or more photoinitiators in the intermediate state can absorb the light of the second wavelength which results in that the molecules of the one or more photoinitiators are transferred from the intermediate state to a reactive state by absorption of light of the second wavelength which locally triggers the polymerization of the photocurable resin to form at least one three-dimensional object.

16. An apparatus for volumetric printing a three-dimensional object by multi-color photopolymerization of a photocurable resin, which comprises an irradiation device for performing an irradiation process of irradiating, on basis of a plurality of printing parameters, a photocurable resin with light of a first wavelength and light of a second wavelength, different from the first wavelength to form, by multi-color photopolymerization, a three-dimensional object in at least one direction, wherein the light of the first wavelength and the light of the second wavelength intersect in a formation zone, wherein the apparatus comprises a controller configured to spatially and/or temporally vary at least one printing parameter, particularly a printing parameter influencing the curing behavior of the photocurable resin, during the irradiation process.
